(19)

**Europäisches Patentamt**

**European Patent Office**

**Office européen des brevets**

(11) **EP 4 597 364 A1**

(12) **EUROPEAN PATENT APPLICATION**

(43) Date of publication:
**06.08.2025  Bulletin 2025/32**

(21) Application number: **24155883.2**

(22) Date of filing: **05.02.2024**

(51) International Patent Classification (IPC):
**G06N 3/0442** *(2023.01)*      **G06N 3/045** *(2023.01)*
**G06N 3/0475** *(2023.01)*      G06N 3/0499 *(2023.01)*

(52) Cooperative Patent Classification (CPC):
**G06N 3/0442; G06N 3/045; G06N 3/0475;**
G06N 3/0464; G06N 3/0499

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **NXAI GmbH**
  **4020 Linz (AT)**
• **Johannes Kepler Universität Linz**
  **4040 Linz (AT)**

(72) Inventors:
• **Hochreiter, Sepp**
  **4300 St. Valentin (AT)**
• **Beck, Maximilian**
  **4040 Linz (AT)**
• **Pöppel, Korbinian**
  **4040 Linz (AT)**
• **Spanring, Markus**
  **1070 Wien (AT)**
• **Kopp, Michael**
  **6300 Zug (CH)**

(74) Representative: **Best, Bastian**
**Bestpatent**
**Patentanwalt Bastian Best**
**Konrad-Zuse-Platz 8**
**81829 München (DE)**

(54) **EXTENDED LONG SHORT-TERM MEMORY NEURAL NETWORKS**

(57)      Disclosed is an artificial neural network system (200). In one implementation, the neural network system (200) comprises both a phonological memory (102) configured to store input vectors and to retrieve stored input vectors, and a semantic memory (104) configured to store semantic information extracted from input vectors.

Fig. 2

## Description

### TECHNICAL FIELD

The invention generally relates to a neural network system architecture for machine learning, and more specifically to a hardware-efficient foundational neural network model which is in particular usable as a large language model, e.g., for natural language processing.

### BACKGROUND

The current phase of the AI revolution can be characterized as "the memory revolution". Neural networks have demonstrated the ability to store large amounts of data efficiently and retrieve the data based on content alone. This has created a new philosophy of letting neural networks absorb vast amounts of human knowledge and allow them to learn to combine this knowledge in new ways. Several mechanisms are emerging to facilitate this process, including human-in-the-loop reinforcement learning, new approaches to meta, few-shot or zero-shot learning, memory augmentation, and others. Virtually all recent applications are built on this paradigm, be it novel chatbots, systems capable of writing computer code, solving mathematical problems, and providing guidance for generative techniques in various domains such as images, video, audio, and text.

One type of foundational model which has paved the way to today's form of artificial intelligence is the long short-term memory (LSTM) network first described in Hochreiter, Sepp & Schmidhuber, Jürgen. (1997). Long Short-term Memory. Neural computation. 9. 1735-80. LSTMs have demonstrated superior performance in a wide variety of tasks, including classification, processing and predicting data based on time series, such as in handwriting, speech recognition, machine translation, speech activity detection, robot control, video games, healthcare, and many others. Until 2017, LSTM has been the leading speech processing and text analysis technology, empowering billions of smartphones.

More recently, the so-called Transformer model has been introduced in Vaswani, Ashish et al. (2023). Attention Is All You Need. arXiv:1706.03762. Correspondingly, the international patent application WO 2018/217948 A1 titled "ATTENTION-BASED SEQUENCE TRANSDUCTION NEURAL NETWORKS" assigned to Google LLC discloses a system with an encoder neural network having a sequence of one or more encoder subnetworks. Each encoder subnetwork comprises an encoder self-attention sublayer configured to apply, for each input position in the input order, an attention mechanism over the encoder subnetwork inputs using queries derived from the encoder subnetwork input.

However, a shortcoming of Transformer models is that they consume vast amounts of computing power, especially when processing long texts. Transformer models are generally quadratic in the context length, meaning that their memory footprint and computational complexity grow quadratic with the sequence length. This is particularly problematic for long texts and large datasets, where the memory demands can become prohibitive, even for high-end hardware. The increasing trend towards working with larger and longer sequences, driven by the availability of vast amounts of data and the need to capture more complex relationships between words, has further exacerbated this issue.

Furthermore, Transformer models are typically only able to compute pairwise interactions, i.e., dot products of embedding vectors, which makes it challenging to capture complex relationships between tokens that involve more than two tokens in a sequence. In particular, Transformer models are not capable of abstraction. Since Transformer models are designed to compare tokens directly, this means that the model can only learn to recognize patterns in the input sequence by comparing each token to every other token, making Transformer models unable to capture higher-level concepts or patterns in the input sequence beyond simple pairwise relationships between tokens.

As an alternative to the Transformer model architecture, the so-called Mamba model has recently been introduced in Gu, Albert et al. (2023). Mamba: Linear-Time Sequence Modeling with Selective State Spaces. ar-Xiv:2312.00752. Mamba integrates selective state space models into a neural network architecture without attention or multilayer perceptron blocks. The authors claim that the Mamba architecture achieves linear scaling in sequence length and a higher throughput than the Transformer architecture.

In view of the above, it is an objective of the present invention to provide an improved neural network model architecture, in particular with reduced memory and compute requirements compared to the known architectures, thereby overcoming the above-mentioned disadvantages of the prior art at least in part.

### SUMMARY OF THE INVENTION

The invention is defined in the independent claims. Advantageous modifications of embodiments of the invention are defined in the dependent claims as well as in the description and the drawings.

As a general overview, the present invention concerns an innovative machine-learning model architecture that enables the efficient and resource-saving processing of large datasets and long texts, which are crucial in various natural language processing (NLP) applications such as, without limitation machine translation, text summarization, and question answering systems. The disclosed architecture represents a foundational milestone in NLP research, paving the way for more sophisticated and powerful language models that can better understand and interact with natural language data.

According to one aspect of the present invention, an artificial neural network system is provided. The neural network system may be implemented on a data processing apparatus. The neural network system may be implemented by instructions stored in a storage medium of the data processing apparatus that, when executed, implement the neural network system. The neural network system may be provided as an electronic data structure. The neural network system may be configured to be stored on a storage medium of a data processing apparatus and/or configured to be processed by one or more processors of a data processing apparatus. Such a data processing apparatus may comprise one or more computers.

It may be provided that the neural network system comprises a memory also referred to as a phonological memory or first memory. This memory may be configured to store input vectors and/or to retrieve stored input vectors. This way, the neural network system is enabled to memorize the exact input vector and retrieve it later. Even input vectors may be memorized which have never been seen before. The phonological memory may comprise an attention mechanism. The phonological memory may be configured to store a compressed version of the input vectors.

It may be provided that the neural network system comprises a memory also referred to as a semantic memory or second memory. This memory may be configured to store semantic information or characteristics extracted from input vectors. Different input vectors or different inputs may be associated with the same semantic information, thereby allowing the neural network system to learn abstractions. Since only one common semantic information (i.e., abstraction) has to be stored for two or more inputs with the same semantic meaning, this requires less memory consumption and storage space.

It may be provided that the neural network system comprises only a phonological memory, or only a semantic memory, or both a phonological memory and a semantic memory, thereby providing a dual memory architecture.

This way, the proposed neural network architecture represents a significant advancement in the field of machine learning. The new neural network architecture allows computations to scale linearly with the input length, resulting in significantly reduced processor load, e.g., during runtime, compared to traditional architectures such as the Transformer model. The provision of semantic memory, in particular as an additional semantic memory, enables the system to process large amounts of text more efficiently while maintaining improved performance. This is particularly beneficial for applications where processing large volumes of text data is a critical requirement. The reduced computational load and memory usage resulting from the linear scaling of computations with input length make it possible to develop and deploy applications that were previously hindered by the limitations of traditional neural network architectures. Due to its ability to scale linearly with the content size, the neural network system can also be trained on larger data given the same hardware platform as conventional model architectures. As a result, the provided neural network system may provide higher quality outputs, faster processing, faster inference, less energy consumption, less cost and/or may run on smaller devices.

Despite the advantageous combination of two types of memories, both memory components on their own may be beneficially exploitable. In fact, the semantic memory may be used as a replacement for original long short-term memory (LSTM) architectures in existing applications, making it an ideal solution for mobile applications, reinforcement applications and any type of applications where LSTMs are already used.

Another benefit of the proposed neural network system lies in its improved capability to self-structure the memorized content through its architecture. This aspect can be expected to have a significant impact on current application fields envisioned by foundation models.

It may be provided that a memory of the neural network system, in particular the phonological memory and/or the semantic memory, comprises a directly modifiable memory. In other words, the neural network system, in particular its phonological memory and/or its semantic memory, may comprise one or more modifiable memory cells. This may allow the neural network system to be adjusted to one or more user-defined properties. As a non-limiting example, the neural network system may be adjusted, in particular user-adjusted, such that its output is more friendly or less friendly. As another non-limiting example, the neural network system may be adjusted, in particular user-adjusted, such that its output is more about leisure, hobbies or work. As another non-limiting example, the neural network system may be adjusted, in particular user-adjusted, such that its output is more technical or high-level. This aspect may provide an advantageous addition and/or alternative to prompt engineering.

The memory architecture disclosed herein allows that a current token, input sequence or input vector needs to interact only with the memory, which results in the above-mentioned linear complexity, unlike in attention-based architectures where each token has to interact with each other token, resulting in the quadratic complexity.

It may be provided that the phonological memory comprises, consists of, or is formed by a recurrent neural network (RNN), in particular a long short-term memory (LSTM), more particularly a vectorized LSTM (vLSTM). The vLSTM may combine characteristics of an LSTM, softmax attention, linear attention and/or retention, as will be described in the detailed description. Details about the general LSTM architecture may be found in Hochreiter, Sepp & Schmidhuber, Jürgen. (1997). Long Short-term Memory. Neural computation. 9. 1735-80, the content of which is incorporated herein by reference.

It may be provided that the vLSTM is configured to store vector-valued memory cells, thereby forming a matrix-valued memory state. Accordingly, unlike the original LSTM, the vLSTM's memory cells (i.e., entries in the memory cell vector) may be vectors, which results in a matrix-state memory cell. This way, the vLSTM can be enabled to efficiently store complete words, tokens, or the like, and not only single scalar values.

It may be provided that the vLSTM has a parallel and/or recurrent form, preferably both a parallel and recurrent form. Similar to softmax attention, the vLSTM may project the inputs into queries, keys and values. The vLSTM may operate multiple heads in parallel. Similar to linear attention and retention, the vLSTM may have the softmax function removed to enable a recurrent formulation. In order to regain the expressivity of softmax attention and to introduce nonlinearities, the vLSTM may use a similar gating mechanism with forget, input and output gates as the original LSTM. The activation function for the forget gate and/or the output gate may be a sigmoid function $\sigma(x)$.

It may be provided that the phonological memory comprises one or more exponential input gates, preferably one exponential input gate as the only input gate. Accordingly, the activation function for the input gate may be the exponential function $\exp(x) = e^x$. In a common recurrent architecture, when a current token is processed, the system has to decide on the weight with which to store said token, which is typically done using a weight between 0 and 1. If the current token has been stored with weight 0.5, for instance, this can result in problems when another token arrives later which is considered to be five times more important, since a weight of 5x0.5, i.e., 5 is not possible. Using an input gate with an exponential activation function (or more generally with an activation function which is uncapped, i.e., unbounded from above) overcomes this problem because there is no upper bound to the possible future weights.

It may be provided that the semantic memory comprises, consists of, or is formed by a recurrent neural network (RNN), in particular a long short-term memory (LSTM), more particularly a scalar LSTM (sLSTM). The sLSTM may comprise a gating mechanism similar to the vLSTM. The activation function for the forget gate and/or the output gate may be a sigmoid function $\sigma(x)$.

It may be provided that the sLSTM is configured to store scalar-valued memory cells, thereby forming a vector-valued memory state. This way, the sLSTM can be enabled to efficiently store abstractions of the input vectors, preferably one concept or abstraction or idea per memory cell.

It may be provided that the sLSTM has a non-parallel and/or recurrent form, preferably both a non-parallel and recurrent form. Unlike the vLSTM, the sLSTM may not have the three input projections into queries, keys and values followed by dot-product interaction. Instead, similar to the original LSTM, the sLSTM may have recurrent weight matrices feeding the previous hidden state into the next state's gate pre-activations to prevent a parallel formulation as the vLSTM.

It may be provided that the semantic memory comprises one or more exponential input gates, preferably one exponential input gate as the only input gate. Accordingly, the activation function for the input gate may be the exponential function $\exp(x) = e^x$. This way, the semantic memory may exhibit the same benefits as described above with respect to the exponential gating of the phonological memory.

It may be provided that at least one output of the phonological memory feeds into the semantic memory. This way, both memories can be effectively combined into a powerful and efficient neural network model architecture.

It may be provided that the neural network system is configured to receive input data, in particular an input sequence. The input data may comprise an input text, in particular an input text in natural language. The neural network system may comprise an input layer configured to receive the input data, in particular the input sequence. It may be provided that the neural network system is configured to output or generate output data, in particular an output sequence. The output data may comprise an output text, in particular an output text in natural language. The neural network system may comprise an output layer configured to output or generate the output data.

It may be provided that the neural network system comprises a user interface, in particular a graphical, command-line and/or chat-based user interface. The user interface may be configured to receive a user request, also referred to as a prompt, which comprises the input data mentioned above. The user interface may be configured to provide, in response to the user request, a system reply which comprises the output data. Accordingly, when the input data comprises an input text in natural language, the user interface provides a human-machine interface which allows the user to interact in a particularly natural and intuitive way with a data processing apparatus.

It may be provided that the neural network system comprises at least one neural network block, also referred to herein as extended long short-term memory (xLSTM) block. The at least one neural network block may comprise the phonological memory and/or the semantic memory. It may be provided that the at least one neural network block comprises a vLSTM, in particular the vLSTM according to any one of the variants disclosed herein, as the phonological memory, and an sLSTM, in particular the sLSTM according to any one of the variants disclosed herein, as the semantic memory.

It may be provided that the neural network block has an input signature or input interface and/or an output signature or output interface which is compatible with a conventional neural network block such as a self-attention block in a Transformer architecture or a state space model (SSM) block in a Mamba architecture. This way, the neural network block (xLSTM block) can be seamlessly integrated into existing neural network architectures.

In one exemplary application, the neural network system may be used as a natural language processing system, commonly also referred to as a language model or a "large language model" (LLM). The input data may comprise a sequence of words in natural language, e.g., a sentence or phrase. The output data may comprise a sequence of words in natural language, e.g., a summary of the input data, a modified version of the input data, an answer to a question in the input data, and the like. This system processes natural language data through technical means, involving algorithms and computational models to analyze, understand, and generate human language, which is a technical problem in the field of computer science. The technicality stems, at least in part, from the computational efficiency required to handle the complexity of human language, as well as from. Additionally or alternatively, the output data may comprise one or more commands configured to invoke an action of a data processing apparatus, a technical system or a technical process. This system has hence a direct link to physical reality at least on the output side.

In another exemplary application, the neural network system may be used as a machine translation system. The input data may comprise a sequence of words in an original language, e.g., a sentence or phrase. The output data may comprise a translation of the input data into a target language. This system processes natural language data through technical means, involving algorithms and computational models to translate text from one language to another automatically, which addresses the technical challenge of language variance and context understanding.

In another exemplary application, the neural network system may be used as a speech recognition system. The input data may comprise a sequence of audio data representing a spoken utterance. The output data may comprise a sequence of graphemes, characters, or words that represents the utterance, e.g., as a transcription of the input data. This system converts spoken language into text using technology such as audio signal processing and pattern recognition algorithms, a process that involves technical considerations related to technical characteristics such as signal analysis and noise reduction.

In another exemplary application, the neural network system may be used as an image recognition and/or classification system. The input data may comprise digital images and/or video frames. The output data may comprise labels or descriptions identifying objects, features, and/or activities depicted in the input data. This application leverages the system's ability to analyze visual data, recognize patterns, and/or make inferences based on the visual content. Such systems can be used for a variety of purposes, including but not limited to, identifying objects in security footage, classifying images in a database for easier retrieval, detecting and recognizing faces in photographs, and analyzing satellite imagery for geographical mapping and/or environmental monitoring.

In another exemplary application, the neural network system may be used as a control system for controlling a technical system or process. The input data may comprise sensor data captured from the technical system or process. The input data may comprise real-time operational parameters, sensor readings, and/or environmental conditions related to the technical system or process. This could encompass a wide range of systems such as manufacturing assembly lines, chemical processing plants, HVAC (heating, ventilation, and air conditioning) systems in buildings, or even autonomous robotic systems, e.g., in logistics and warehousing. The output data may comprise control signals, adjustments to operational parameters, and/or recommendations for optimizing performance and/or efficiency. This system processes complex datasets to dynamically control and/or optimize the operation of technical systems or processes, addressing technical challenges such as maintaining optimal operating conditions, reducing energy consumption, and/or ensuring product quality or system performance. The technicality arises, at least in part, from the need to interpret diverse and complex data streams and/or to make real-time decisions that directly impact the efficiency, safety, and/or reliability of the controlled system or process. Examples of such systems or processes include, without limitation, optimizing the operation of a renewable energy plant to maximize output while accounting for variable weather conditions, controlling the environmental conditions within a greenhouse to maximize crop yield, or dynamically adjusting the parameters of a water treatment facility to ensure the quality of treated water while optimizing energy use.

In another exemplary application, the neural network system may be used as an autonomous vehicle navigation system. The input data may comprise sensor data captured from the vehicle's surroundings, such as LiDAR data, radar signals, camera images, and/or GPS data. The output data may comprise control signals for steering, acceleration, and/or braking, navigation paths and/or real-time adjustments to the vehicle's route. This system processes complex sensor data to make informed decisions in real-time, a technical challenge involving sophisticated algorithms for perception, decision-making, and motor control. The technicality arises, at least in part, from the integration and real-time processing of diverse data types to navigate safely and efficiently in a dynamic environment, necessitating high computational efficiency and robust decision-making capabilities.

In another exemplary application, the neural network system may be used as a predictive maintenance tool for industrial machinery. The input data may comprise sensor data captured from various sensors attached to machinery, such as temperature sensors, vibration sensors, and/or acoustic sensors, indicating the operational state and/or health of the machinery. The output data may comprise predictive maintenance alerts, recommendations for maintenance actions, and/or prognostics regarding the expected lifespan of machine components. This system processes sensor data to predict machinery failures before they occur, employing machine learning and data analytics techniques. One technical challenge lies in accurately modeling machinery behavior and detecting signs of impending failure, which is a technical problem in the field of predictive maintenance.

In another exemplary application, the neural network system may be used as an energy management system for smart grids. The input data may comprise real-time and historical consumption data from smart meters, weather forecasts, energy prices, and/or the status of renewable energy sources. The output data may comprise optimization strategies for energy distribution, demand response recommendations, and/or predictions for energy consumption. This system addresses the technical complexities of managing and optimizing energy flows within a smart grid, involving the technical problem of balancing supply and demand in real-time.

Another aspect of the present invention relates to a method. The method may be computer-implemented. The method may comprise a step of providing a neural network system according to any one of the aspects described herein. The method may comprise a step of receiving an input vector. The method may comprise a step of storing the input vector in a phonological memory of the neural network system. The method may comprise a step of storing semantic information extracted from the input vector in a semantic memory of the neural network system. In addition or alternatively, the method may comprise one or more steps and/or may comprise one or more features as disclosed herein in the context of the neural network system.

Another aspect of the present invention relates to a data processing apparatus. The data processing apparatus may comprise means for carrying out a method according to any one of the aspects described herein. Another aspect of the present invention relates to a data processing apparatus comprising a memory and one or more processors coupled to the memory, the one or more processors being configured to carry out a method according to any one of the aspects described herein, in particular to: provide a neural network system, in particular according to any one of the aspects described herein; receive an input vector; store the input vector in a phonological memory of the neural network system; and store semantic information extracted from the input vector in a semantic memory of the neural network system. A data processing apparatus may comprise any kind of data processing hardware and may encompass all kinds of apparatus, devices, and machines for processing data, including by way of example a programmable processor, a computer, or multiple processors or computers.

Another aspect of the present invention relates to a system comprising one or more computers configured to implement a neural network system according to any one of the aspects described herein.

Another aspect of the present invention relates to a system comprising one or more computers and one or more storage devices storing instructions that when executed by the one or more computers cause the one or more computers to implement a neural network system according to any one of the aspects described herein.

Another aspect of the present invention relates to a system comprising one or more computers and one or more storage devices storing instructions that when executed by the one or more computers cause the one or more computers to implement a neural network system according to any one of the aspects described herein.

Another aspect of the present invention relates to a computer program. Another aspect of the present invention relates to a computer-readable medium having stored thereon a computer program. The computer program may comprise instructions which, when the program is executed by a computer, cause the computer to carry out a method according to any one of the aspects described herein. A computer program may also be referred to as a program, software, a software application, an app, a module, a software module, a script, or code. A computer program may be written in a programming language, including compiled or interpreted languages. A computer program may be deployed in any form, including as a stand-alone product or as a module, component, subroutine, or other unit suitable for use in a computing environment.

Another aspect of the present invention relates to a non-transitory computer-readable medium storing a set of instructions that, when executed by one or more processors of an apparatus, cause the apparatus to carry out a method according to any one of the aspects described herein, in particular to: provide a neural network system, in particular according to any one of the aspects described herein; receive an input vector; store the input vector in a phonological memory of the neural network system; and store semantic information extracted from the input vector in a semantic memory of the neural network system.

The terms used herein should generally be construed as understood by the average person skilled in the art, unless explicitly indicated otherwise. The following explanations may guide the understanding:

The term "artificial Intelligence" (AI) should be understood as referring to a branch of computer science that aims to develop machines or software capable of intelligent behavior, typically with the goal to mirror or surpass human intelligence in specific tasks. AI systems are designed to perform complex tasks such as reasoning, learning, perception, problem-solving, and understanding natural language. These systems can typically adapt to new situations and improve their performance over time. The goal of AI is to create systems that can function autonomously and interact with their environment in a human-like manner.

The term "natural language processing" (NLP) should be understood as referring to a field of computer science and artificial intelligence that focuses on enabling computers to understand, interpret, and/or manipulate human language. It typically combines computational linguistics with statistical, machine learning, and deep-learning models to process human language in the form of text or voice data, allowing computers to comprehend the intent and sentiment of the speaker or writer. NLP usually involves tasks such as text and speech processing, natural language understanding, text analytics, and it has various applications, including machine translation, speech recognition, and chatbots for customer service, to name just a few.

The term "machine learning" (ML) should be understood as a subset of artificial intelligence that focuses on the development of algorithms and statistical models that enable computers to perform specific tasks without using explicit instructions. Instead, machine-learning systems learn and make predictions or decisions based on data. Machine-learning algorithms build a mathematical model based on sample data, known as training data, to make predictions or decisions without being explicitly programmed to perform the task. Machine learning can be employed in a variety of applications, including image and speech recognition, medical diagnosis, predictive analytics, and many more, where it enables systems to learn from and adapt to new data independently.

The term "machine-learning algorithm" should be understood as a computational procedure that is designed to analyze data, learn from it, and identify patterns or make decisions based on the input data without being explicitly programmed for the task. Machine-learning algorithms leverage statistical techniques to enable systems to improve their performance on a specific task with more data over time. Machine-learning algorithms are the foundation upon which machine-learning models are built, providing the methods or processes through which data is transformed into actionable insight. Examples of machine-learning algorithms include linear regression, decision trees, support vector machines, and neural networks, among others.

The term "machine-learning model" should be understood as referring to the output generated when a machine-learning algorithm is trained on a dataset. It represents the knowledge or understanding gained by the algorithm from the data, encapsulating the learned patterns or predictions. Essentially, a machine-learning model is what enables predictions or decisions based on new, unseen data, based on the learning it has derived from the training process. The machine-learning model is typically defined by its parameters, which may be adjusted during the training phase to minimize the difference between the predicted outcome and the actual outcome. Although, strictly speaking, "machine-learning algorithm" and "machine-learning model" have distinct definitions, it is not uncommon for these terms to be used interchangeably in casual discourse. This usage stems from the close relationship between algorithms and models in the workflow of machine-learning projects, where the algorithm is the means of creating the model. Therefore, these terms may be used synonymously herein unless the distinction is decisive.

The term "artificial neural network" (ANN), or "neural network" (NN) in short, should be understood as a machine-learning or deep-learning model or algorithm. Neural networks are generally inspired by the human brain and typically comprise interconnected nodes or neurons organized into layers. Neural networks can be used to process data and learn from examples, enabling them to perform tasks such as image recognition, natural language processing, and more. A neural network typically comprises an input layer, one or more hidden layers, and an output layer. Through a process called training, neural networks can learn to perform specific tasks by adjusting their internal parameters, or "weights", based on labeled or unlabeled data.

The term "training" should be understood as referring to the process of teaching a machine-learning model to make predictions or decisions, by exposing it to data for which the outcomes are known. The training process typically involves feeding a training dataset into a machine-learning algorithm, which then uses statistical analysis to learn the patterns or relationships within the data. During training, the algorithm iteratively adjusts the parameters of the model to minimize the difference between the predicted outcomes and the actual outcomes in the training data. This adjustment process is typically guided by a loss function, which measures the accuracy of the model's predictions. The goal of training is to produce a model that accurately represents the underlying structure of the data, enabling it to make reliable predictions about new, unseen data. Supervised learning involves training a model on a labeled dataset, where each example in the training data is paired with the correct output. The model learns to predict the output from the input data. Unsupervised learning involves training a model on data without labeled responses. The model tries to find patterns and relationships in the data on its own. Semi-supervised learning combines both labeled and unlabeled data during the training process, which can be beneficial when acquiring a fully labeled dataset is costly or impractical.

The term "memory" in the context of a neural network should be understood as referring to a neural network's ability to retain and/or utilize information over time, allowing the neural network to learn from sequential data and/or to make predictions based on past inputs. The most basic form of memory in a neural network is embedded in its weights and biases, which are typically adjusted during the training process. These parameters store the learned patterns or features from the training data, allowing the network to recognize similar patterns in new data and make predictions accordingly. Recurrent neural networks (RNNs) introduce a more dynamic form of memory by incorporating loops within the network, allowing information to persist from one step of the data to the next. This architecture is particularly useful for tasks involving sequential data, such as speech recognition or language translation, as it enables the network to maintain a form of short-term memory regarding previous inputs. In the case of a Long Short-Term Memory (LSTM) network, memory may be implemented through specialized units called memory cells, which are typically controlled by three gates, namely the input gate, the forget gate, and the output gate. These gates may determine what information to store, discard, and/or output from the memory cell, enabling the neural network to capture long-term dependencies and make predictions across multiple time steps.

The term "input vector" should be understood as a numerical representation of the input data fed into a model or network for processing, or as a numerical representation of data derived from such input data. The term "vector", as used throughout this disclosure, may not be strictly limited to one-dimensional vectors, but may also encompass data having an n-dimensional structure with n > 2. The term "input vector" may also be used as a synonym to "input data", "data", "input token", "input sequence", and the like. In mathematical terms, an input vector typically comprises the values of the input features and is used to feed data into the network. The dimensionality of the input vector depends on the number of features considered by the model. For example, in natural language processing, an input vector could represent a word, sentence, or document, with each element indicating the presence, frequency, or encoding of words based on a predefined vocabulary.

The term "semantic information" should be understood as referring to the meaning or context conveyed by an input vector. Semantic information may be represented using embedding vectors, which are typically numerical representations of words, sentences, or documents. Typically, the closer two embedding vectors are in the vector space, the more they represent semantically similar concepts. Therefore, embedding vectors may serve as a way to capture and represent the semantic content of the input data in a neural network. Semantic information typically goes beyond the mere syntactic arrangement of elements (such as words in a sentence or symbols in a code) to encompass the contextual and cultural nuances, intentions, and relationships that give data its meaning. For instance, in natural language processing, understanding semantic information allows AI models to grasp the meanings of sentences, differentiate between homonyms based on context, and recognize the relationships between concepts, enabling more accurate language translation, sentiment analysis, and question-answering systems.

The term "dual memory architecture" should be understood as comprising two memories configured for the purposes explained in more detail herein, but without excluding the presence of one or more additional memories or data storage mechanisms for other purposes.

The term "attention mechanism" should be understood as a technique that allows a neural network to focus on the most relevant parts of the input data. An attention mechanism may calculate "soft" weights for each element of the input sequence, allowing the neural network to selectively focus on specific parts of the data. This can be particularly useful for tasks like machine translation, where the neural network needs to align words in the input and output sequences.

The term "Transformer model" should be understood as a type of neural network model that is distinguished by its exclusive reliance on attention mechanisms, eschewing recurrent layers to process sequential data. At the core of the Transformer is the self-attention mechanism, which enables each position in the sequence to attend to all positions in the previous layer of the model simultaneously. This global perspective is said to allow the model to learn context and relationships between words or elements in the input sequence, regardless of their positional distance from each other. The Transformer model typically comprises an encoder and a decoder. The encoder processes the input sequence and transforms it into a continuous representation that holds all the learned information of that sequence. Each encoder layer typically has two sub-layers: a multi-head self-attention mechanism and a position-wise fully connected feed-forward network. The decoder generates the output sequence based on the encoder's representation and the previously generated elements. Each decoder layer typically has three sub-layers: a multi-head self-attention mechanism, a multi-head attention mechanism over the encoder's output, and a position-wise fully connected feed-forward network.

The term "recurrent neural network" (RNN) should be understood as a type of artificial neural network that is designed to work with sequential data or time series data. It is typically characterized by its ability to retain a memory of previous inputs and is often used in natural language processing, speech recognition, and other tasks that involve sequential patterns. RNNs are typically capable of processing input of any length, and the model size does not increase with the size of the input.

The term "long short-term memory" (LSTM) should be understood as a type of RNN used in the field of deep learning. It is designed to overcome the limitations of traditional RNNs in learning and remembering long-term dependencies in sequential data. LSTMs are particularly well-suited for tasks such as speech recognition, language translation, and time series prediction due to their ability to retain and utilize information over extended periods. The architecture of an LSTM typically includes memory blocks that can maintain and update information over time, making them effective for modeling sequential data. An LSTM typically comprises or consists of three gates that regulate the flow of information: the forget gate, the input gate, and the output gate. These gates are responsible for controlling the retention and flow of information within the network. The forget gate decides what information to discard from the cell state, the input gate determines what new information to store in the cell state, and the output gate regulates the information that will be output to the next layer of the network.

The term "large language model" (LLM) should be understood as referring to a type of machine-learning model that has been trained to recognize, generate, translate, and/or summarize vast quantities of written human language and textual data. LLMs are notable for their ability to achieve general-purpose language generation. LLMs comprise a large number of parameters, typically in the millions or often billions of parameters, which enable them to capture a wide array of linguistic nuances, patterns, and contexts.

## BRIEF DESCRIPTION OF THE DRAWINGS

The invention may be better understood by reference to the following drawings:

Fig. 1:    A schematic high-level overview of a family of neural network architectures in accordance with embodiments of the invention.

Fig. 2:    A schematic block diagram of a neural network system with an xLSTM block in accordance with embodiments of the invention.

Fig. 3:    A schematic block diagram of a multi-head vLSTM block in accordance with embodiments of the invention.

Fig. 4:    A schematic block diagram of a multi-head sLSTM block in accordance with embodiments of the invention.

Fig. 5:    A schematic block diagram of an integration of an xLSTM block into a Transformer model in accordance with embodiments of the invention.

Fig. 6:    A schematic block diagram of an integration of an xLSTM block into a Mamba model in accordance with embodiments of the invention.

Fig. 7:    A schematic detailed overview of the xLSTM neural network model architecture in accordance with embodiments of the invention.

Figs. 8-11:    Exemplary test results of performance benchmarks in accordance with embodiments of the invention.

Fig. 12:    A flow diagram of a method in accordance with embodiments of the invention.

Fig. 13:    A schematic block diagram of computer hardware usable for carrying out the method of Fig. 12.

## DETAILED DESCRIPTION

In the following, representative embodiments illustrated in the accompanying drawings will be explained. It should be understood that the illustrated embodiments and the following descriptions refer to examples which are not intended to limit the embodiments to one preferred embodiment.

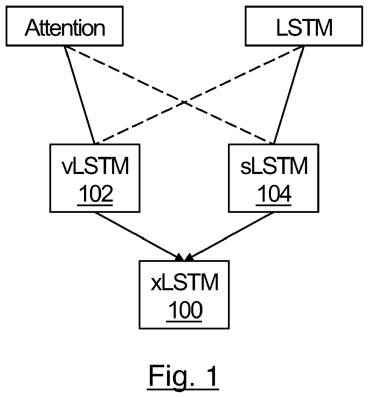

Fig. 1 illustrates a schematic high-level overview of a family of neural network architectures in accordance with embodiments of the invention.

A novel neural network architecture 100, which is also referred to as extended long short-term memory (xLSTM) herein, is provided. In the illustrated embodiment, the neural network 100 comprises both a phonological memory 102 and a semantic memory 104. In a preferred embodiment, the phonological memory 102 is provided by a vectorized LSTM (vLSTM) and the semantic memory 104 is provided by a scalar LSTM (sLSTM).

However, it should be understood that the particular implementation of the phonological memory 102 can exploit at least some of its capabilities irrespective of how the semantic memory 104 is implemented. Vice versa, the particular implementation of the semantic memory 104 can exploit at least some of its capabilities irrespective of how the phonological memory 102 is implemented. Therefore, another embodiment of the invention is a neural network which comprises a vLSTM 102 as the phonological memory and any type of semantic memory 104 or no semantic memory 104 at all, and yet another embodiment of the invention is a neural network which comprises an sLSTM 104 as the semantic memory and any type of phonological memory 102 or no phonological memory 102 at all.

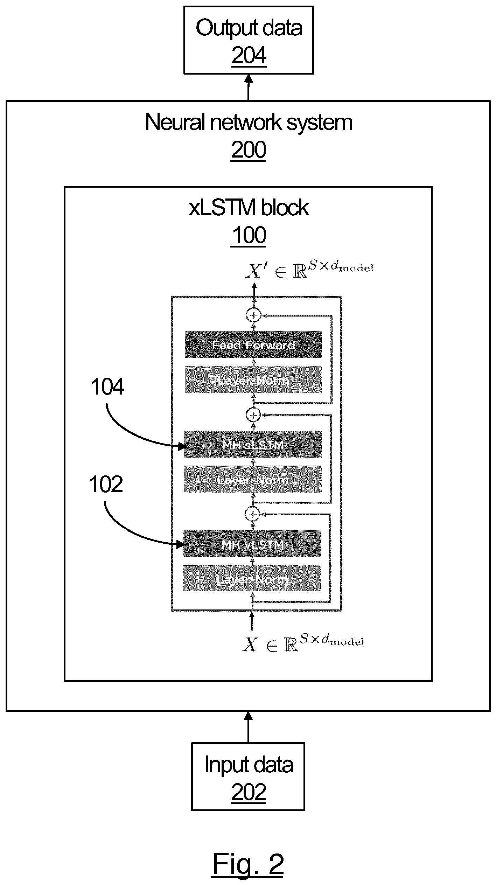

Fig. 2 illustrates a schematic block diagram of a neural network system 200 in accordance with an exemplary embodiment. The neural network system 200 is configured to receive input data 202, such as an input sequence. To this end, the neural network system 200 may comprise an input layer (not shown in Fig. 2) configured to receive the input data 202. The neural network system 200 is configured to generate output data 204, such as an output sequence. To this end, the neural network system 200 may comprise an output layer (not shown in Fig. 2) configured to output the output data 204. As described above, the neural network system 200 can perform any of a variety of tasks that require processing input data 202 to generate output data 204.

The neural network system 200 comprises a neural network block 100 also referred to as an extended long short-term memory (xLSTM) block. As will be explained in more detail below, the xLSTM block 100 advantageously combines a phonological memory 102 and a semantic memory 104 to significantly improve runtime performance with reduced computing requirements.

The xLSTM block 100 in the embodiment illustrated in Fig. 2 is configured to receive inputs $X \in \mathbb{R}^{S \times d_{model}}$ and to produce outputs $X' \in \mathbb{R}^{S \times d_{model}}$ with sequence length $S$ and model dimension (or embedding dimension) $d_{model}$. In other words, the inputs and outputs comprise a matrix structure with a shape of $S$ rows and $d_{model}$ columns.

The input $X$ of the xLSTM block 100 is fed through an optional layer normalization block and into the vLSTM block 102, which is a multi-head vLSTM block in the illustrated embodiment.

The output of the vLSTM block 102 is fed through an optional layer normalization block and into the sLSTM block 104, which is a multi-head sLSTM block in the illustrated embodiment.

The output of the sLSTM block 104 is fed through an optional layer normalization block and through a feed forward block to produce the output $X'$ of the xLSTM block 100.

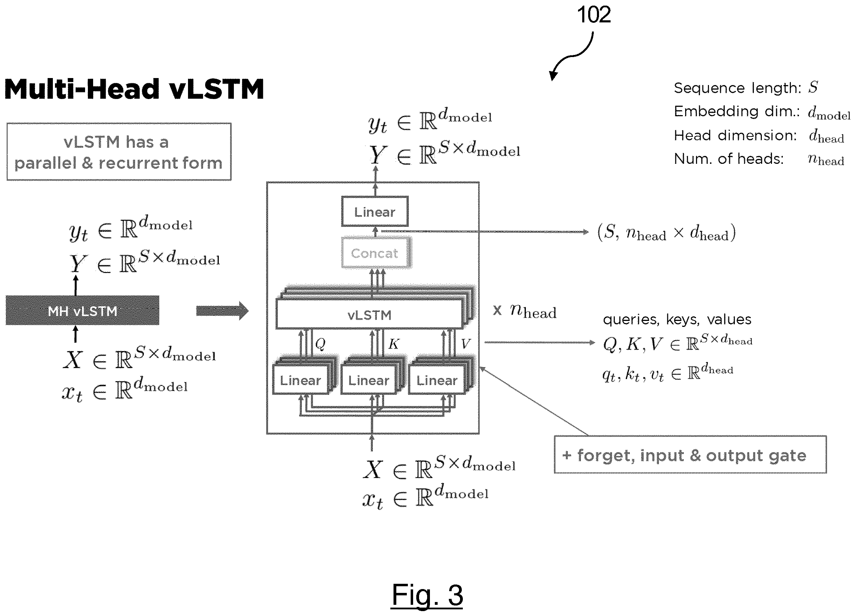

Fig. 3 illustrates a schematic block diagram of a multi-head vLSTM block 102 in accordance with an exemplary embodiment as one example realization of a phonological memory, which may be used to implement the vLSTM block 102 shown in Fig. 2. The illustrated embodiment of the vLSTM block 102 combines features of the original LSTM, Softmax-Attention, Linear Attention and Retention. Analog to Softmax-Attention, the vLSTM block 102 projects the inputs $X \in \mathbb{R}^{S \times d_{model}}$ into queries, keys and values $Q, K, V \in \mathbb{R}^{S \times d_{head}}$, wherein $d_{head}$ denotes the head dimension with $d_{head} = d_{model}/n_{head}$ with $n_{head}$ being the number of heads. The vLSTM block 102 operates on $n_{head}$ heads in parallel. Similar to Linear Attention and Retention, the softmax function has been removed from the vLSTM block 102 to enable a recurrent formulation. In order to regain the expressivity of Softmax-Attention and to introduce nonlinearities, the vLSTM block 102 uses a similar gating mechanism with forget, input and output gates as the original LSTM.

A difference to the LSTM is that its memory cells (i.e., entries in the memory cell vector $c_t$) are vectors, which results in a matrix-state memory cell $c_t \in \mathbb{R}^{d_{head} \times d_{head}}$.

In the illustrated embodiment, the activation function for the forget gate and output gate is the sigmoid function $\sigma(x)$ and the input gate activation function is the exponential function $\exp(x) = e^x$.

In terms of the recurrent form of certain embodiments of the vLSTM block 102, each of the $n_{head}$ heads may process the inputs with a different set of weights in parallel. The recurrent forward updates of the vLSTM block 102 may use three states, namely a memory cell state, a normalizer state and a hidden state. Given an input $x_t \in \mathbb{R}^{d_{model}}$, the final output $y_{t+1} \in \mathbb{R}^{d_{model}}$ may be obtained by concatenating the hidden states of all heads and projecting it with an output projection layer.

Since the illustrated embodiment of the vLSTM block 102 uses exponential input gates, the term $e^i$ may run into overflow or underflow when the floating-point precision is limited. To avoid this, a max state $m_t$ may be introduced which prevents overflow (i.e., avoids large input arguments to $\exp(\cdot)$) as this would result in NaNs during training.

In general terms, compared to Linear Attention, the illustrated vLSTM block 102 does not use feature functions on keys and queries. In that sense, the illustrated vLSTM block 102 is more similar to Retention. Compared to Retention, which only uses fixed decay factors and has imaginary parameterization of $Q$ and $K$, the illustrated vLSTM block 102 uses a gating mechanism similar to LSTM with exponential input gate, which increases the non-linearity.

In certain embodiments, the vLSTM 102 may comprise one or more of the following components:

1. inputs for $t = 1... S$: $x_t \in \mathbb{R}^{d_{model}}$ or $X \in \mathbb{R}^{S \times d_{model}}$

2. queries, keys, values for each head $l$: $Q_l, K_l, V_l \in \mathbb{R}^{S \times d_{head}}$

3. projection weights for each head $l$: $W_{q,l}, W_{k,l}, W_{v,l} \in \mathbb{R}^{d_{head} \times d_{model}}$

4. projection biases for each head $l$: $b_{q,l}, b_{k,l}, b_{v,l} \in \mathbb{R}^{d_{head}}$

5. input gate weights and bias for each head $l$: $W_{i,l} \in \mathbb{R}^{1 \times d_{model}}$ and $b_{i,l} \in \mathbb{R}$

6. forget gate weights and bias for each head $l$: $W_{f,l} \in \mathbb{R}^{1 \times d_{model}}$ and $b_{f,l} \in \mathbb{R}$

7. output gate weight and bias for each head: $W_{o,l} \in \mathbb{R}^{d_{model} \times d_{head}}$ and $b_o \in \mathbb{R}^{d_{head}}$

8. output projection weight and bias: $W_p \in \mathbb{R}^{d_{\text{model}} \times n_{\text{head}} d_{\text{head}}}$ and $b_p \in \mathbb{R}^{d_{\text{model}}}$

9. forgetgate for each head $l$: preactivation $f_{t,l} \in \mathbb{R}$, activation $\tilde{f}_t \in \mathbb{R}$

10. inputgate for each head $l$: preactivation $i_{t,l} \in \mathbb{R}$ activation $\tilde{i}_t \in \mathbb{R}$

11. outputgate for each head $l$: preactivation $o_t \in \mathbb{R}^{d_{\text{head}}}$, activation $\tilde{o}_t \in \mathbb{R}^{d_{\text{head}}}$

12. memory cell state for each head $l$: $c_{t,l} \in \mathbb{R}^{d_{\text{head}} \times d_{\text{head}}}$

13. normalizer state for each head $l$: $n_{t,l} \in \mathbb{R}^{d_{\text{head}}}$

14. hidden state for each head $l$: $h_{t,l} \in \mathbb{R}^{d_{\text{head}}}$

15. output for $t = 1... S$: $y_t \in \mathbb{R}^{d_{\text{model}}}$ or $Y \in \mathbb{R}^{S \times d_{\text{model}}}$

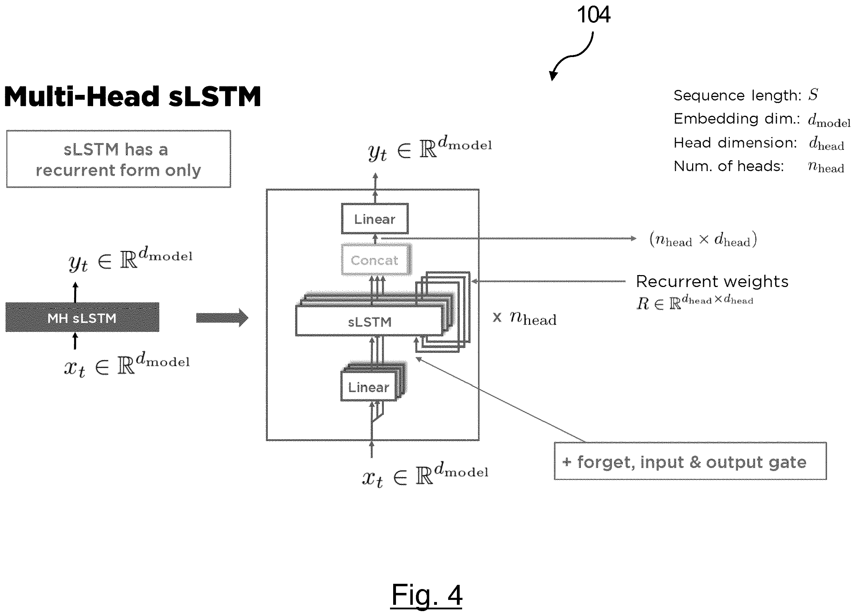

Fig. 4 illustrates a schematic block diagram of a multi-head sLSTM block 104 in accordance with an exemplary embodiment as one example realization of a semantic memory, which may be used to implement the sLSTM block 104 shown in Fig. 2. The illustrated embodiment of the sLSTM 104 comprises a gating mechanism similar to that of the vLSTM 102 shown in Fig. 3. The illustrated embodiment of the sLSTM 104 also uses an exponential input gate, a sigmoid forget and output gate, and computes multiple heads in one layer.

The sLSTM 104 is, however, closer to the original LSTM, one reason being the way how the inputs are handled and how the pre-activations for the gates are computed. The illustrated embodiment of the sLSTM 104 does not have the three-fold input projection into queries, keys and values followed by dot-product interaction, but instead comprises recurrent weight matrices feeding the previous hidden state into the next state's gate pre-activations. This brings back the flavor of the original Recurrent Neural Networks while preventing a parallel formulation as the vLSTM 102.

In certain embodiments, the sLSTM 104 may comprise one or more of the following components:

1. inputs for $t = 1...S$: $x_t \in \mathbb{R}^{d_{\text{model}}}$ or $X \in \mathbb{R}^{S \times d_{\text{model}}}$

2. forgetgate for each head $l$: preactivation $f_{t,l} \in \mathbb{R}^{d_{\text{head}}}$, activation $\tilde{f}_t \in \mathbb{R}^{d_{\text{head}}}$

3. inputgate for each head $l$: preactivation $i_{t,l} \in \mathbb{R}^{d_{\text{head}}}$, activation $\tilde{i}_t \in \mathbb{R}^{d_{\text{head}}}$

4. cellgate for each head $l$: preactivation $z_{t,l} \in \mathbb{R}^{d_{\text{head}}}$, activation $\tilde{z}_t \in \mathbb{R}^{d_{\text{head}}}$

5. outputgate for each head $l$: preactivation $o_t \in \mathbb{R}^{d_{\text{head}}}$, activation $\tilde{o}_t \in \mathbb{R}^{d_{\text{head}}}$

6. gate input and recurrent weights and bias for each head $l$: $W_{g,l} \in \mathbb{R}^{d_{\text{head}} \times d_{\text{model}}}, R_{g,l} \in \mathbb{R}^{d_{\text{head}} \times d_{\text{head}}}$ and $b_{g,l} \in \mathbb{R}^{d_{\text{head}}}$ for $g \in \{f,i,z,o\}$

7. output projection weight and bias: $W_p \in \mathbb{R}^{d_{\text{model}} \times n_{\text{head}} d_{\text{head}}}$ and $b_p \in \mathbb{R}^{d_{\text{model}}}$

8. memory cell state for each head $l$: $c_{t,l} \in \mathbb{R}^{d_{\text{head}}}$

9. normalizer state for each head $l$: $n_{t,l} \in \mathbb{R}^{d_{\text{head}}}$

10. hidden state for each head $l$: $h_{t,l} \in \mathbb{R}^{d_{\text{head}}}$

11. output for $t = 1...S$: $y_t \in \mathbb{R}^{d_{\text{model}}}$ or $Y \in \mathbb{R}^{S \times d_{\text{model}}}$

Similar to the vLSTM 102 discussed above, also in the illustrated embodiment of the sLSTM 104, each of the $n_{head}$ heads processes the inputs with a different set of weights in parallel.

The sLSTM 104 processes the inputs $x_t \in \mathbb{R}^{d_{model}}$ for each timestep $t$ sequentially. Together with the hidden

state $x_t \in \mathbb{R}^{d_{head}}$, the forget gate, input gate, cell gate and output gate pre-activations $f_t, i_t, z_t, o_t \in \mathbb{R}^{d_{head}}$ can be computed in two different ways:

- In one embodiment, also referred to as regular sLSTM, the sLSTM 104 uses the original LSTM pre-activation computation where the input as well as the hidden state are fed into all gate pre-activations.
- In another embodiment, also referred to as sLSTMhin, only the hidden states $h_t$ are fed into the input gate (hence the name hin) and in no other gate. The inputs $x_t$ do not influence the input gate.

In certain embodiments, the sLSTM 104 uses exponential input gates similar to the vLSTM 102 described above. Hence, to avoid overflow or underflow issues, the same stabilization mechanism as described above for the vLSTM 102 may be applied.

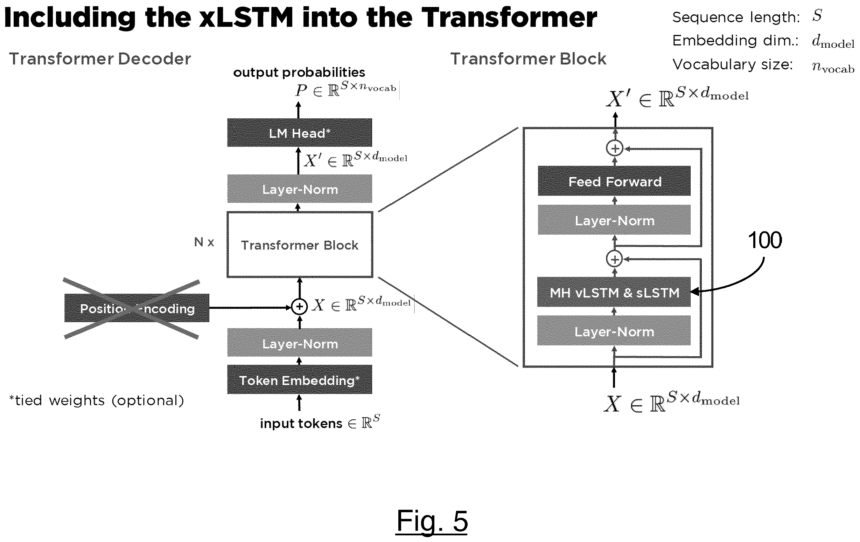

Fig. 5 illustrates a schematic block diagram of an integration of the xLSTM block 100 into a Transformer model architecture in accordance with an exemplary embodiment.

As can be seen in Fig. 5, the xLSTM block 100 is arranged within the Transformer model architecture where the (multi-head) self-attention block would normally be located. For example, the xLSTM block 100 may be arranged to replace the self-attention sub-layer of the encoder subnetwork and/or the encoderdecoder attention sub-layer of the decoder subnetwork of the Transformer model disclosed in EP 3 542 316 titled "ATTENTION-BASED SEQUENCE TRANSDUCTION NEURAL NETWORKS", the content of which is incorporated herein by reference.

As also indicated in Fig. 5, the position encoding mechanism (see also the "Positional Encoding" labels in Fig. 1 of EP 3 542 316) has been removed from the Transformer model. Accordingly, certain embodiments of the invention may comprise a neural network system 200 without positional encoding. Thanks to the auto-regressive nature of embodiments of the invention, the system can determine where in the sequence it is currently located, making it obsolete to explicitly encode such positional information, as required in the Transformer model.

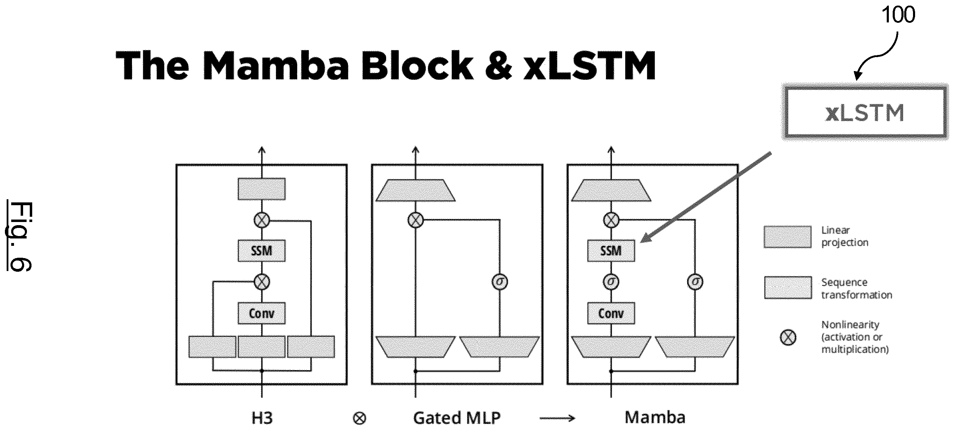

Fig. 6 illustrates a schematic block diagram of an integration of the xLSTM block 100 into a Mamba model architecture in accordance with an exemplary embodiment. Generally speaking, the Mamba block can be understood as removing the extra feed-forward layer from the Transformer. As can be seen, the xLSTM block 100 is arranged within the Mamba model architecture where the state space model (SSM) block would normally be located.

The two exemplary integrations shown in Figs. 5 and 6 illustrate that the xLSTM block 100 can be integrated particularly seamlessly into existing neural network architectures.

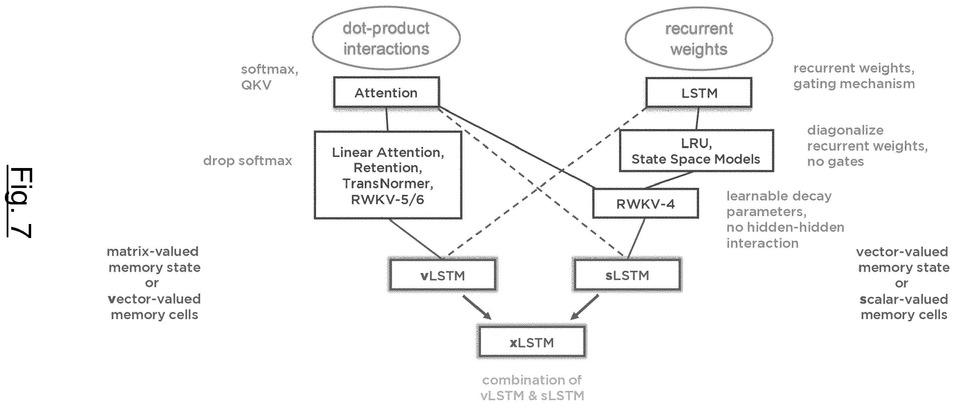

Fig. 7 illustrates a detailed overview of a family of neural network model architectures in accordance with an exemplary embodiment. As can be seen, the illustrated xLSTM family is generally based on Attention with dot-product interactions and LSTM with recurrent weights. These concepts are advantageously combined to different degrees to obtain the vLSTM 102 and sLSTM 104, respectively, as described elsewhere herein, and the vLSTM 102 and sLSTM 104 can be combined into xLSTM 100.

The "Attention" component shown in Fig. 7 may be mathematically characterized as follows:

$$v_t'^{\top} = \sum_{i=1}^{t} \frac{e^{q_t^{\top} k_i}}{\sum_{j=1}^{t} e^{q_t^{\top} k_j}} \, v_i^{\top}$$

The "LSTM" component shown in Fig. 7 may be mathematically characterized as follows:

$$c_{t+1} = \sigma(f_t) \odot c_t + \sigma(i_t) \odot \tanh(z_t)$$

$$h_{t+1} = \sigma(o_t) \odot \tanh(c_{t+1})$$

The "vLSTM" component shown in Fig. 7 may be mathematically characterized as follows:

$$c_{t+1} = \sigma(f_t) \odot c_t + e^{i_t} \odot k_t v_t^{\top}$$

$$n_{t+1} = \sigma(f_t) \odot n_t + e^{i_t} \odot k_t$$

$$h_{t+1}^{\top} = \sigma(o_t) \odot \frac{q_t^{\top} c_{t+1}}{q_t^{\top} n_{t+1}}$$

The "sLSTM" component shown in Fig. 7 may be mathematically characterized as follows:

$$c_{t+1} = \sigma(f_t) \odot c_t + e^{i_t} \odot z_t$$

$$n_{t+1} = \sigma(f_t) \odot n_t + e^{i_t}$$

$$h_{t+1} = \sigma(o_t) \odot \frac{c_{t+1}}{n_{t+1}}$$

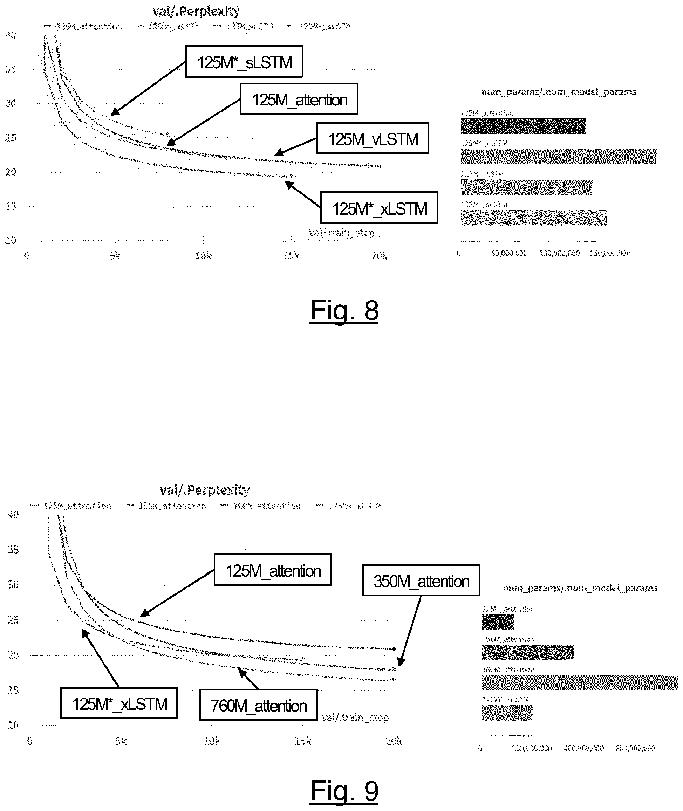

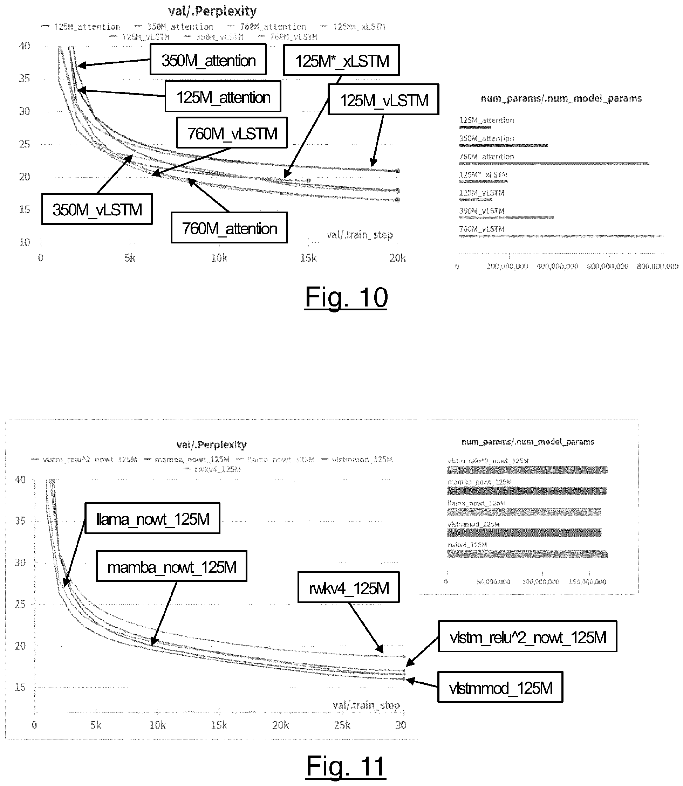

Figs. 8-11 illustrate test results of performance benchmarks in which certain exemplary implementations of the neural network model architectures disclosed herein are compared to conventional neural network model architectures, namely GPT (Fig. 8, 9 and 10) and Mamba (Fig. 11). Fig. 8 illustrates how an xLSTM outperforms GPT, as well as sLSTM and vLSTM only. Fig. 9 illustrates how a smaller xLSTM is as good as a larger GPT. Fig. 10 illustrates how a vLSTM alone matches the performance of GPT. Fig. 11 illustrates how a vLSTM outperforms Mamba, Llama and RWKV. The comparisons are based on the perplexity of the respective models. As the person skilled in the art will appreciate, the perplexity is an evaluation metric commonly used to measure the quality of language models, as it indicates how much a model is surprised by seeing new data. The lower the perplexity, the better the training is.

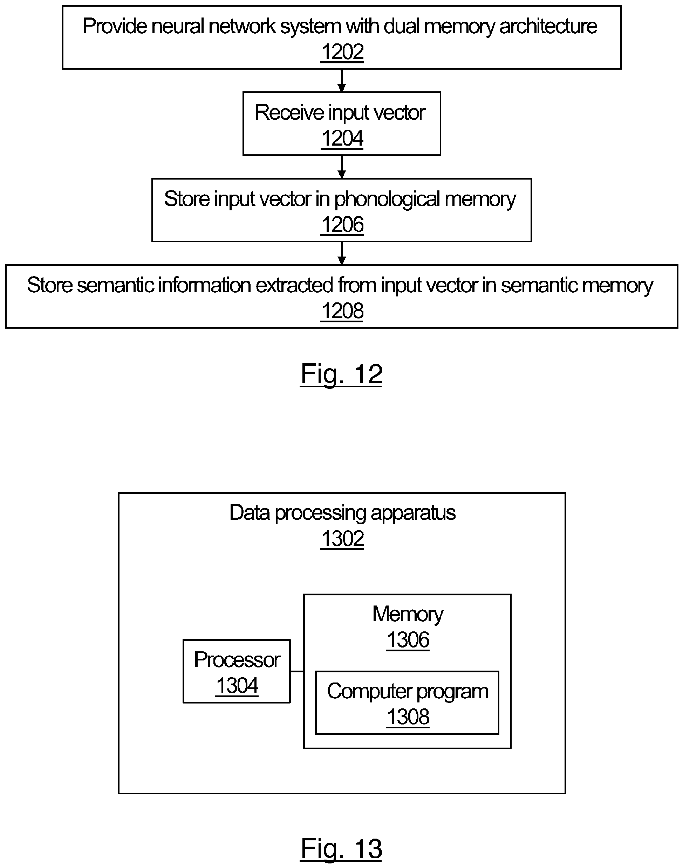

Fig. 12 illustrates a flowchart of a method in accordance with an exemplary embodiment. A neural network system 200, which may incorporate some or all aspects disclosed herein, is provided in step 1202. An input vector is received in step 1204. The input vector is stored in a phonological memory 102 of the neural network system 200 in step 1206. Semantic information extracted from the input vector is stored in a semantic memory 104 of the neural network system 200 in step 1208.

Fig. 13 illustrates a schematic block diagram of computer hardware usable for carrying out the method shown in Fig. 12 and/or for storing and/or processing embodiments of the neural network system 200 disclosed herein. As can be seen, a data processing apparatus 1302 is provided. The data processing apparatus 1302 comprises one or more processors, one of which is exemplarily shown as processor 1304. The data processing apparatus 1302 comprises a memory 1306. The one or more processors 1304 are communicatively coupled to the memory 1306. The memory 1306 comprises a computer program 1308. The computer program 1308 may implement some or all aspects of the disclosed method.

In the following, details about certain aspects, embodiments and implementation details are provided to facilitate the understanding of the invention:

**1.1 Notation**

- Batch size: *B*

- Sequence length: *S*

- Model dimension (or: embedding dimension): $d_{\text{model}}$

- Hidden dimension: $d_h$ (typically: $d_h = d_{\text{model}}$) [for LSTMs]

- Input dimension: $d_{in}$ [for LSTMs]

- Number of heads: $n_{\text{head}}$

- Head dimension:

$$d_{\text{head}} = d_{\text{model}}/n_{\text{head}}$$

### 1.2 Attention

In this section we explain the *Attention* mechanism as introduced by [VSP+23]. The attention mechanism builds the core of the Transformer architecture, which consists of an encoder and a decoder module. Each module uses a different variant of the attention mechanism. The encoder uses full attention (see Section 1.2.1) and the decoder uses causal self-attention (see Section 1.2.2).

The components of the attention layer are:

1. inputs: $X \in \mathbb{R}^{S \times d_{model}}$

2. queries, keys, values for each head *i*: $Q_i, K_i, V_i \in \mathbb{R}^{S \times d_{head}}$

3. projection weights for each head *i*: $W_{q,i}, W_{k,i}, W_{v,i} \in \mathbb{R}^{d_{head} \times d_{model}}$

4. projection biases for each head *i*: $b_{q,i}, b_{k,i}, b_{v,i} \in \mathbb{R}^{d_{head}}$

5. output projection weight and bias: $W_p \in \mathbb{R}^{d_{model} \times n_{head} d_{head}}$ and $b_p \in \mathbb{R}^{d_{model}}$

The "activation" function or the non-linearity inside attention is the softmax function. Given an vector $x \in \mathbb{R}^d$, the $\text{softmax}(x) \in \mathbb{R}^d$ is defined as

$$(\text{softmax}(x))_i = \frac{\exp(x_i)}{\sum_{j=1}^{d} \exp(x_j)} = \frac{e^{x_i}}{e^{x_1} + e^{x_2} + \ldots + e^{x_d}}. \qquad (1.1)$$

In other words, the softmax function rescales the entries in the vector such that they are all positive and sum up to one. Often these outputs are then interpreted as probabilities, even though there is no true probability distribution. In the attention layer the eoftmax serves a different purpose. It computes the weights or contribution of each value vector in the final attention output.

The attention layer takes as input a sequence of tokens $x_t \in \mathbb{R}^{d_{model}}$ with *t* = 1...*S*, stacked into an input matrix $X \in \mathbb{R}^{S \times d_{model}}$. Then the inputs are fed through linear layers that for each head *i* = 1...$n_{head}$ project the inputs into queries, keys and values

$$Q_i = X W_{q,i}^{\top} + b_{q,i} \in \mathbb{R}^{S \times d_{head}}, \qquad (1.2)$$

$$K_i = X W_{k,i}^{\top} + b_{k,i} \in \mathbb{R}^{S \times d_{head}}, \qquad (1.3)$$

$$V_i = X W_{v,i}^{\top} + b_{v,i} \in \mathbb{R}^{S \times d_{head}}, \qquad (1.4)$$

where $W_{q,i}, W_{k,i}, W_{v,i} \in \mathbb{R}^{d_{head} \times d_{model}}$ are the weights and $b_{q,i}, b_{k,i}, b_{v,i} \in \mathbb{R}^{d_{head}}$ are the biases of the linear layers. After these projections, the queries, keys and values are used as inputs to the attention mechanisms.

### 1.2.1 Full Attention

The goal of an encoder module of a Transformer or an encoder-only Transformer is to encode a full sequence into a compact representation. It gets a full sequence of inputs $x_t \in \mathbb{R}^{d_{head}}$ for *t* = 1...*S* and each input token $x_t$ has access to all other input tokens $x_t$ for $t \in [1, S]$. Therefore, regular or full attention uses the queries $q_t$ and the keys $k_t$ of all timesteps to determine the weights (actually called *attention scores*) for the values $v_t$ in whole sequence. In this context the attention scores $c_{ti}$ can be interpreted as sort of importance of token *i* for the current token at time *t*.

Given the queries, keys and values $Q_i, K_i, V_i \in \mathbb{R}^{S \times d_{head}}$ the $\text{Attention}(Q_i, K_i, V_i) \in \mathbb{R}^{S \times d_{head}}$ is defined as

$$\text{Attention}(Q_i, K_i, V_i) = \text{softmax}\left(\frac{Q_i K_i^{\top}}{\sqrt{d_{head}}}\right) V_i = \text{softmax}(\tilde{C}_i) V_i = C_{A,i} V_i, \qquad (1.5)$$

where the softmax is applied rowwise to the *unnormalized combination* or *similarity* matrix $\tilde{C} = \frac{QK^\top}{\sqrt{d_{\text{head}}}} \in \mathbb{R}^{S \times S}$. Applying the softmax to $\tilde{C}$ yields the *combination* or *normalised similarity* matrix $C_A = \text{softmax}(\tilde{C})$.

We use the term *similarity* matrix since $\tilde{C} = \frac{QK^\top}{\sqrt{d_{\text{head}}}}$ computes the pairwise dot-product similarity between the queries and keys. We call $C_A$ *combination* matrix since the matrix product $C_A V$ computes a weighted sum (i.e. a *combination*) of the values $V$ of all timesteps in $S$.

Since the softmax forces the rows of C to sum to one, the attention operation computes a convex combination of the values $v_t$ for $t = 1...S$.

### 1.2.2 Causal Self-Attention

The purpose of a decoder modulo of a Transformer or a decoder-only Transformer is to generate text by predicting the the next token $x_{t+1}$, given all previous tokens $x_t$ for $t = 1...t$. Therefore, an input $x_t$ only has access to tokens $x_i$, where $i \leq t$.

*Causal Self-Attention* achieves this "restricted access" by modifying either the similarity matrix $\tilde{C}$ or the combination matrix $C$ by pointwise matrix multiplication or masking.

The first option, where all elements above the diagonal in $\tilde{C}$ are replaced by $-\infty$ is used for example in Andrej Karpathys reimplementation of GPT2 [Kar22]. This works, since $\exp(-\infty) = 0$ and we apply the softmax on $\tilde{C}$.

Another option is to pointwise multiply the the softmax($\tilde{C}$) matrix with a lower triangular matrix $D \in \mathbb{R}^{S \times S}$ containing only 1s on and below the diagonal and 0s above the diagonal:

$$D = \begin{pmatrix} 1 & 0 & \cdots \\ 1 & 1 & \cdots \\ \vdots & \vdots & \ddots \end{pmatrix} \in \mathbb{R}^{S \times S}. \tag{1.6}$$

Then similar to the full attention, given the queries, keys and values $Q_i, K_i, V_i \in \mathbb{R}^{S \times d_{\text{head}}}$ the $\text{SelfAttention}(Q_i, K_i, V_i) \in \mathbb{R}^{S \times d_{\text{head}}}$ is defined as

$$\begin{aligned} \text{SelfAttention}(Q_i, K_i, V_i) &= \left( \text{softmax}\left( \frac{Q_i K_i^\top}{\sqrt{d_{\text{head}}}} \right) \odot D \right) V_i \\ &= \left( \text{softmax}(\tilde{C}_i) \odot D \right) V_i = C_{SA,i} V_i, \end{aligned} \tag{1.7}$$

where the (normalised) combination matrix $C_{SA,i}$ now already contains the causal mask $D$.

Both versions are mathematically identical. The reason why we might want to keep the second version in mind is, that it gives us more flexibility when we want to modify Attention or SelfAttention later on.

### 1.2.3 Looking Deeper into Attention

In the two previous section we introduced regular or full Attention and Self-Attention in vector and matrix notation. In this section we want to go a bit deeper and show how single entries in the Attention formulae look like in order to got a deep understanding of the attention mechanism.

Let us begin with the queries, keys and values $Q, K, V \in \mathbb{R}^{S \times d_{\text{head}}}$. Their entries can be written as follows,

$$Q = \begin{pmatrix} - & q_1^\top & - \\ & \vdots & \\ - & q_S^\top & - \end{pmatrix} \in \mathbb{R}^{S \times d_{\text{head}}}, \tag{1.8}$$

$$K = \begin{pmatrix} - & k_1^\top & - \\ & \vdots & \\ - & k_S^\top & - \end{pmatrix} \in \mathbb{R}^{S \times d_{\text{head}}}, \tag{1.9}$$

$$V = \begin{pmatrix} - & v_1^\top & - \\ & \vdots & \\ - & v_S^\top & - \end{pmatrix} \in \mathbb{R}^{S \times d_{\text{head}}}, \qquad (1.10)$$

where the row vectors are the queries, keys and values $q_t, k_t, v_t \in \mathbb{R}^{d_{\text{head}}}$ for time step $t$.

Plugging these matrices in the Attention formula and leaving out the $\sqrt{d_{\text{head}}}$ normalization and the decay mask for notational simplicity we get

$$\begin{aligned} V' &= \text{softmax}(Q\,K^\top)\,V \\ &= \text{softmax}\left( \begin{pmatrix} q_1^\top \\ \vdots \\ q_S^\top \end{pmatrix} (k_1 \ \cdots \ k_S) \right) \begin{pmatrix} v_1^\top \\ \vdots \\ v_S^\top \end{pmatrix} \\ &= \text{softmax} \begin{pmatrix} q_1^\top k_1 & q_1^\top k_2 & \cdots & q_1^\top k_S \\ q_2^\top k_1 & q_2^\top k_2 & \cdots & q_2^\top k_S \\ \vdots & \vdots & \ddots & \vdots \\ q_S^\top k_1 & q_S^\top k_2 & \cdots & q_S^\top k_S \end{pmatrix} \begin{pmatrix} v_1^\top \\ v_2^\top \\ \vdots \\ v_S^\top \end{pmatrix}, \end{aligned} \qquad (1.11)$$

where the softmax is applied to the rows of $QK^\top$ and $V' \in \mathbb{R}^{S \times d_{\text{head}}}$ is a convex *combination* of the values $V$. Note that row $t$ of $V'$ contain the attention outputs for time step $t$.

Inserting the definition of the softmax function we see that in case of regular Attention $v_t'^\top \in \mathbb{R}^{1 \times d_{\text{head}}}$ is given by

$$v_t'^\top = \sum_{i=1}^{S} \frac{e^{q_t^\top k_i} v_i^\top}{e^{q_t^\top k_1} + e^{q_t^\top k_2} + \ldots + e^{q_t^\top k_S}} = \sum_{i=1}^{S} \frac{e^{q_t^\top k_i}}{\sum_{j=1}^{S} e^{q_t^\top k_j}} v_i^\top = \sum_{i=1}^{S} c_{ti}\, v_i^\top, \qquad (1.12)$$

where

$$c_{ti} = \frac{e^{q_t^\top k_i}}{\sum_{j=1}^{S} e^{q_t^\top k_j}}$$

are the entries of the *combination matrix C*.

In order to obtain $v_t'^\top$ for Causal Self-Attention one just has to replace the upper limit of the sums, which is the sequence length $S$ by the current time step $t$.

From equations 1.12 and 1.11 we can make the following observations:

1. By formulating the attention formula as in equations 1.12 and 1.11 we can now understand why the input variables to attention are called queries, keys and values. We observe that the keys and values always occur with the same index $i$ which is the loop or sum variable, whereas the queries always use the same (output) timestep index $t$ for the whole loop (sum). This means the query vector at timestep $t$ is compared to the keys of every other timestep to determine the weight of the respective value in the sum over all values.

2. From equation 1.12 we can clearly see that the output values of attention $v_t'^\top$ are a convex combination of the input values $v_t^\top$.

3. We observe that the nonlinear elements of Attention are the exponential function applied to the dot-products $q_t^\top k_i$ and the fraction in order to normalise these values. We will see later that the order, i.e. at first computing the dot-product and then apply the exponential function, prevents us from formulating the sum in equation 1.12 in a recurrent way. One can also already see this in equation 1.11. Applying the softmax raw-wise to $QK^\top$ amounts to applying the exponential function pointwise and normalising the rows afterwards. However, in order to formulate the sum as a running (recurrent) turn, we need to somehow reuse previous computations. But since we have to recompute $e^{q_t^\top k_i}$ for all $i$ for each timestep $t$, there is now way to reuse computations from earlier timesteps. We will see ideas on how to fix this issue and continue this discussion later.

The QKV Product. In this paragraph, we will have a closer look at the $QK^\mathsf{T}V$ product. We start off with equation (1.11) and remove the softmax function. The result are two matrix products:

$$
\begin{aligned}
V' &= (Q\,K^\mathsf{T})\,V \\
&= \left(\begin{pmatrix} q_1^\mathsf{T} \\ \vdots \\ q_S^\mathsf{T} \end{pmatrix} \begin{pmatrix} k_1 & \cdots & k_S \end{pmatrix}\right) \begin{pmatrix} v_1^\mathsf{T} \\ \vdots \\ v_S^\mathsf{T} \end{pmatrix} \\
&= \begin{pmatrix} q_1^\mathsf{T}k_1 & q_1^\mathsf{T}k_2 & \cdots & q_1^\mathsf{T}k_S \\ q_2^\mathsf{T}k_1 & q_2^\mathsf{T}k_2 & \cdots & q_2^\mathsf{T}k_S \\ \vdots & \vdots & \ddots & \vdots \\ q_S^\mathsf{T}k_1 & q_S^\mathsf{T}k_2 & \cdots & q_S^\mathsf{T}k_S \end{pmatrix} \begin{pmatrix} v_1^\mathsf{T} \\ v_2^\mathsf{T} \\ \vdots \\ v_S^\mathsf{T} \end{pmatrix}
\end{aligned}
\tag{1.13}
$$

$$
\begin{pmatrix} v_1'^\mathsf{T} \\ v_2'^\mathsf{T} \\ \vdots \\ v_S'^\mathsf{T} \end{pmatrix} = \begin{pmatrix} (q_1^\mathsf{T}k_1)v_1^\mathsf{T} + (q_1^\mathsf{T}k_2)v_2^\mathsf{T} + \cdots + (q_1^\mathsf{T}k_S)v_S^\mathsf{T} \\ (q_2^\mathsf{T}k_1)v_1^\mathsf{T} + (q_2^\mathsf{T}k_2)v_2^\mathsf{T} + \cdots + (q_2^\mathsf{T}k_S)v_S^\mathsf{T} \\ \vdots \\ (q_S^\mathsf{T}k_1)v_1^\mathsf{T} + (q_S^\mathsf{T}k_2)v_2^\mathsf{T} + \cdots + (q_S^\mathsf{T}k_S)v_S^\mathsf{T} \end{pmatrix}.
$$

Now, we can do the same for Self-Attention, by multiplying $QK^\mathsf{T}$ with the lower triangular matrix $D$:

$$
V' = (Q\,K^\mathsf{T} \odot D)\,V
$$

$$
\begin{pmatrix} v_1'^\mathsf{T} \\ v_2'^\mathsf{T} \\ \vdots \\ v_S'^\mathsf{T} \end{pmatrix} = \begin{pmatrix} (q_1^\mathsf{T}k_1)v_1^\mathsf{T} \\ (q_2^\mathsf{T}k_1)v_1^\mathsf{T} + (q_2^\mathsf{T}k_2)v_2^\mathsf{T} \\ \vdots \\ (q_S^\mathsf{T}k_1)v_1^\mathsf{T} + (q_S^\mathsf{T}k_2)v_2^\mathsf{T} + \cdots + (q_S^\mathsf{T}k_S)v_S^\mathsf{T} \end{pmatrix}.
\tag{1.14}
$$

Since we removed the softmax, we can change the order of multiplication by making use of the associative property of matrix multiplication, i.e. $(q_i^\mathsf{T}k_j)v_j^\mathsf{T} = q_i^\mathsf{T}(k_jv_j^\mathsf{T})$. Moreover, we can move out the $q_i^\mathsf{T}$ for every timestep and get

$$
\begin{pmatrix} v_1'^\mathsf{T} \\ v_2'^\mathsf{T} \\ \vdots \\ v_S'^\mathsf{T} \end{pmatrix} = \begin{pmatrix} q_1^\mathsf{T}(k_1v_1^\mathsf{T}) \\ q_2^\mathsf{T}(k_1v_1^\mathsf{T} + k_2v_2^\mathsf{T}) \\ \vdots \\ q_S^\mathsf{T}(k_1v_1^\mathsf{T} + k_2v_2^\mathsf{T} + \cdots + k_Sv_S^\mathsf{T}) \end{pmatrix}.
\tag{1.15}
$$

In compact form this yields for timestep $t$

$$
v_t'^\mathsf{T} = q_t^\mathsf{T} \sum_{j=1}^{t} k_jv_j^\mathsf{T}.
\tag{1.16}
$$

### 1.2.4 Multi-Head Attention

So far we have introduced the Attention($Q_i$, $K_i$, $V_i$) or SelfAttention($Q_i$, $K_i$, $V_i$) for a single head $i$ with $Q_i, K_i, V_i \in \mathbb{R}^{S \times d_{\text{head}}}$ that operates on vectors of dimension $d_{\text{head}}$. The default (Self-)Attention operation runs $n_{\text{head}}$ heads in parallel and then concatenates the output of each attention head and projects them once again into the model dimension $d_{\text{model}}$.

The Multi-head (Self-)Attention $\text{MultiHead}(Q, K, V) \in \mathbb{R}^{S \times d_{\text{model}}}$ can be defined as

$$
\begin{aligned}
\text{MultiHead}(Q, K, V) &= \text{Concat}(\text{head}_1, \ldots, \text{head}_{n_{\text{head}}})W_p^\mathsf{T} + b_p, \\
\text{where} \quad \text{head}_i &= (\text{Self-})\text{Attention}(Q_i, K_i, V_i),
\end{aligned}
\tag{1.17}
$$

the output projection weight $W_p \in \mathbb{R}^{d_{\text{model}} \times n_{\text{head}}d_{\text{head}}}$, the output projection bias $b_p \in \mathbb{R}^{d_{\text{model}}}$ and the queries, keys and values $Q, K, V \in \mathbb{R}^{n_{\text{head}} \times S \times d_{\text{head}}}$ now contain the projections for each head, e.g. $Q = [Q_1, \ldots, Q_{n_{\text{head}}}]$.

[VSP+23] has found that in practice it is beneficial to use multiple heads in parallel with dimension $d_{\text{head}} = d_{\text{model}}/n_{\text{head}}$, instead of one head of dimension $d_{\text{model}}$. Due to the reduced dimension of each head, the total computational cost is similar to that of single-head attention with full dimensionality.

Moreover, due to the different projections, this choice gives the model the flexibility to attend to information from different representation subspaces, which capture different (semantic) aspects of a single token.

Another advantage is that when scaling up the model size (especially the width) one can keep the head dimension $d_{\text{head}}$ fixed and just increase the n umber of heads $n_{\text{head}}$ as weincrease the model dimension $d_{\text{model}}$ [BMR+20].

### 1.2.5 Efficient Py Torch Implementation of Multi-Head Attention

So far we have formally introduced Multi-Head (Self-)Attention. In order to run experiments it is important to also understand how to efficiently implement attention in for example PyTorch.

Listing 1.2.5 shows a minimal implementation of (Self-)Attention. The main difference to how we have introduced (Self-)Attention mathematically is that in code we use a single linear layer for projecting the queries, keys and values in parallel This in a general optimization that is used for example also in LSTM implementations where the gate preactivations are computed in parallel with this trick. In general, we can apply this trick whenever we use multiple Linear layers within a module that share the same input dimension.

Another extension that has not been mentioned so far is the use of Dropout for regularization. Within the attention module Dropout is applied to the combination matrix, i.e. on the normalized attention scores and to the final output of the attention module.

```python
class MinimalAttention(nn.Module):
    def __init__(
        self,
        d_model: int,
        n_heads: int,
        causal: bool = False,
        bias: bool = True,
        out_dropout: float = 0.0,
        c_dropout: float = 0.0,
    ):
        super().__init__()
        self.n_heads = n_heads
        self.d_model = d_model
        self.d_head = d_model // n_heads
        self.causal = causal

        self.qkv_projection = nn.Linear(d_model, d_model * 3, bias=bias)
        self.output_projection = nn.Linear(d_model, d_model, bias=bias)
        self.out_dropout = nn.Dropout(out_dropout)
        self.c_dropout = nn.Dropout(c_dropout)

    def forward(self, x: torch.Tensor) -> torch.Tensor:
        """
        B: batch size
        S: sequence length
        d_model: embedding dimension or model dimension
        """
        B, S, d_model = x.shape

        qkv = self.qkv_projection(x)  # (B, S, d_model * 3)
        q, k, v = qkv.split(self.d_model, dim=-1)  # (B, S, d_model)
        q = q.view(B, S, self.n_heads, self.d_head).transpose(1, 2)  # (B, n_heads, S, d_head)
        k = k.view(B, S, self.n_heads, self.d_head).transpose(1, 2)  # (B, n_heads, S, d_head)
        v = v.view(B, S, self.n_heads, self.d_head).transpose(1, 2)  # (B, n_heads, S, d_head)

        # similarity matrix
        C_sim = (q @ k.transpose(-2, -1)) * (1.0 / math.sqrt(self.d_head))  # (B, n_heads, S, S)
        # combination matrix
        C_comb = F.softmax(C_sim, dim=-1)  # (B, n_heads, S, S)

        if self.causal:
            # mask out the future
            C_comb = C_comb.tril(diagonal=0)  # (B, n_heads, S, S)

        C_comb = self.c_dropout(C_comb)
        y = C_comb @ v  # (B, n_heads, S, S) x (B, n_heads, S, d_head) -> (B, n_heads, S, d_head)

        y = y.transpose(1, 2).contiguous().view(B, S, d_model)  # (B, S, d_model)
        y = self.out_dropout(self.output_projection(y))
        return y
```

Listing 1: Minimal example of (Self-)Attention in PyTorch.

**1.3 Online softmax normalizer**

In this section we explain how the softmax , which is ubiquitous in machine learning and the core of the Attention mechanism (see Section 1.2) can be computed efficiently in a numerical stable way. This idea was published in [MG18]. To begin, lets recap the definition of the softmax($x$) function for $x \in \mathbb{R}^d$ . It is defined as

$$(\text{softmax}(x))_i = \frac{\exp(x_i)}{\sum_{j=1}^{d} \exp(x_j)} = \frac{e^{x_i}}{e^{x_1} + e^{x_2} + \ldots + e^{x_d}} = \frac{e^{x_i}}{n}, \qquad (1.18)$$

with the normalizer

$$n = \sum_{j=1}^{d} \exp(x_j).$$

Unfortunately due to the limited precision of floating point numbers on real hardware the term $e^x$ can over flow or underflow due to the exponential function. Therefore, a numerically stable softmax is typically implemented as

$$(\text{softmax}(x))_i = \frac{\exp(x_i - \max_{k=1}^{d} x_k)}{\sum_{j=1}^{d} \exp(x_j - \max_{k=1}^{d} x_k)} = \frac{e^{x_i - \max_{k=1}^{d} x_k}}{e^{x_1 - \max_{k=1}^{d} x_k} + \ldots + e^{x_d - \max_{k=1}^{d} x_k}} = \frac{e^{x_i - m}}{n},$$
$$(1.19)$$

where $m = \max_{k=1}^{d} x_k$ ) is the maximum element of $x$ and $n = \sum_{j=1}^{d} e^{x_j - m}$ is the maximum corrected normalizer.

As [MG18] point out, this numerically stable version of softmax can be implemented more efficiently, since it requires three passes over the input vector $x$: The first one calculates the maximum value $m = \max_{k=1}^{d} x_k$ in the second one the normalization term $n = \sum_{j=1}^{d} \exp(x_j - \max_{k=1}^{d} x_k)$ ), and the third pass the final values (softmax($x$))$_i$.

To improve this, [MG18] suggest to compute the maximum value $m$ and the normalization term n in a single pass over the input vector. Algorithm 2 keeps the maximum value $m$ and the normalization term $n$ as it iterates over elements of the input array. At each iteration it needs to adjust the normalizer $n_{i-1}$ to the new maximum $m_i$ and add the new value $x_i$ to the normalizer. In this way Algorithm 2 reduces memory accesses from 4 down to 3 per vector element in $x$.

---
**Algorithm 1** Numerically stable softmax with online normalizer calculation
---

1: **procedure** ONLINENORMALIZERSOFTMAX($x$)          $\triangleright x \in \mathbb{R}^d$
2:     $m_0 = -\inf$
3:     $n_0 = 0$
4:     **for** $i = 1$ to $d$ **do**
5:         $m_i = \max(m_{i-1}, x_i)$
6:         $n_i = n_{i-1} \cdot e^{m_{i-1} - m_i} + e^{x_i - m_i}$
7:     **end for**
8:     **for** $i = 1$ to $d$ **do**
9:         $(\text{softmax}(x))_i = \frac{e^{x_i - m_d}}{n_d}$
10:     **end for**
11: **end procedure**

---

**Parallel online normalizer calculation**

Algorithm 2 defines a sequential way to compute the softmax($x$) for $x \in \mathbb{R}^d$ . In order to speed up this Algorithm it can be also parallelized across multiple threads. This means each thread only operates on a few elements of $x$ and independently compute their maximum value $m$ and normalizer value $n$. Assume we have two threads $A$ and $B$ each computing $m_A$, $n_A$ and $m_B$, $n_B$. Then we can combine their computations by

$$m = \max(m_A, m_B), \qquad (1.20)$$

$$n = n_A \cdot e^{m_A - \max(m_A, m_B)} + n_B \cdot e^{m_B - \max(m_A, m_B)}. \qquad (1.21)$$

For $N$ threads we can split the vector $x$ in $N$ vectors of dimension $d/N$ , such that each thread only computes $m$ and

*n* for $d/N$ elements and then combine the results of all threads with the above equations.

### 1.4 Linear Attention

In this section we explain *Linear Attention* as introduced by [KVPF20]. Linear Attention is an attempt to overcome the quadratic time and memory complexity in input length of Attention as introduced in Section 1.2

Their main idea is to change the way how the attention weights or how the combination matrix as introduced in Section 1.2 is computed. Instead of applying the softmax on the dot-product similarity matrix $QK^T$, they compute the dot-product similarity between feature maps computed from the queries and keys: $\phi(Q)\phi(K)^T$, where $\phi(\cdot): \mathbb{R}^d \to \mathbb{R}^d_+$ is a positive feature function. In their paper they use as $\phi(x) = \text{elu}(x) + 1$, but our experiments show that one could also use the exponential function $\phi(x) = \exp(x)$.

The idea to approximate the softmax with a dot-product between feature mape is based on the insight that one can write a generalized attention equation for any similarity function as

$$v'_t = \frac{\sum_{i=1}^S \text{sim}(q_t, k_i) v_i^\top}{\sum_{i=1}^S \text{sim}(q_t, k_i)}, \qquad (1.22)$$

where $c_{ti} = \text{sim}(q_t, k_i)$ correspond to the combination matrix C in equation 1.5.

Equation 1.22 is equivalent to softmax Attention (Equation 1.5) if the similarity function is substituted by

$$\text{sim}(q, k) = \exp\left(\frac{q^\top k}{\sqrt{d_{\text{head}}}}\right).$$

If *S* in the sum is replaced by *t*, one obtains linear Self-Attention. The only requirement is that $\text{sim}(\cdot)$ is a non-negative kernel function $k(x, y): \mathbb{R}^{2 \times d} \to$ R$_+$.

Since each kernel function can be rewritten as dot-product between feature maps $k(x, y) = \phi(x)^\top \phi(y)$, equation 1.22 can be reformulated as

$$v'^\top_t = \frac{\sum_{i=1}^S \phi(q_t)^\top \phi(k_i) v_i^\top}{\sum_{i=1}^S \phi(q_t)^\top \phi(k_i)}, \qquad (1.23)$$

and by making use of the associative property of matrix multiplication simplified to

$$v'^\top_t = \frac{\phi(q_t)^\top \sum_{i=1}^S \phi(k_i) v_i^\top}{\phi(q_t)^\top \sum_{i=1}^S \phi(k_i)}. \qquad (1.24)$$

The advantage of equation (1.24) compared to (1.23) is that it is much more efficient to compute, since we can compute the sums $\sum_{i=1}^S \phi(k_i) v_i^\top$ and $\sum_{i=1}^S \phi(k_i)$ first and then multiply with $\phi(q_t)^\top$ from the left.

Moreover, in case of causal Linear Attention we discard all terms from the sums were $i > t$, which makes $v'^\top_t$ only dependent on past inputs:

$$v'^\top_t = \frac{\phi(q_t)^\top \sum_{i=1}^t \phi(k_i) v_i^\top}{\phi(q_t)^\top \sum_{i=1}^t \phi(k_i)}. \qquad (1.25)$$

In this case, instead of recomputing the sums for each timestep we can also keep the current result in memory and update the running sum in each time step, which leads us to the recurrent formulation of Linear Attention.

### 1.4.1 Recurrent formulation of Causal Linear Attention

In order to rewrite the parallel formulation of Linear attention into an update formula of a Re-current Neural Network we rewrite the sum in equation 1.25 as recurrent sum by introducing two hidden states, namely the attention memory $s \in \mathbb{R}^{d_{\text{head}} \times d_{\text{head}}}$ matrix state and the normalizer memory $z \in \mathbb{R}^{d_{\text{head}}}$ vector state.

This yields the following recurrence:

$$s_0 = 0, \ z_0 = 0, \tag{1.26}$$

$$s_{t+1} = s_t + \phi(k_t)v_t^\top, \tag{1.27}$$

$$z_{t+1} = z_t + \phi(k_t), \tag{1.28}$$

$$v'^\top_{t+1} = \frac{\phi(q_t)^\top s_{t+1}}{\phi(q_t)^\top z_{t+1}} = \frac{\phi(q_t)^\top \left(s_t + \phi(k_t)v_t^\top\right)}{\phi(q_t)^\top \left(z_t + \phi(k_t)\right)}. \tag{1.29}$$

The major advantage of this recurrent formulation in equations (1.26-1.29) over standard attention is that it does not have the quadratic time complexity on inference (see Section 1.2), but instead reduces the time complexity to be linear in sequence length. However, in practice it has been shown that linear attention does not reach the empirical performance of standard attention.

One possible explanation of this decrease in performance is that it does not take into account the "negative similarity" between queries and keys. To understand this we need to go back to the core of linear attention, which is replacing $\exp(QK^\top)$ by $\phi(Q)\phi(K)^\top$. Since $\phi(x)$ maps the queries and keys to the positive half-plane, the result of the dot-product is also always positive. In this way we retain the property that $v'$ is a convex combination of $v_i$ for $i = 1...S$, but we discard the negative contribution of $QK^\top$ due to the mapping of $\phi(x)$. Therefore, Linear Attention is less expressive than softmax Attention, since it cannot capture the cases where a negative similarity between to tokens might have a semantic meaning that well. This intuition is also based on the observation that one can do some sort of vector arithmetic in word embedding spaces, such as for example "King" - "Man" = "Queen".

Later are will explain ideas, which could possible recover some of the expressivity of softmax Attention, while preserving the recurrent property.

### 1.5 Retention

In this section we explain *Retention* as introduced by [SDH+23]. Retention is the core mechanism of *Retentive Networks (RetNets),* analogous to Attention in Transformers. In their paper, [SDH+23] focus on the Decoder Transformer architecture and replace the Multi-Head Attention layer by their new *Multi-Scale Retention* layer. The main advantage of Retention is that it has a parallel formulation as Attention (see Section 1.2), which can be used for efficient parallel training and a recurrent formulation similar to Linear Attention (see Section 1.4). This enables fast inference with linear time complexity. In contrast to Linear Attention, [SDH+23] claim, that Retentive Networks are competitive with Transformers on language modeling tasks.

The components of the Retention layer are similar to those of the Attention layer (see Section 1.2):

1. inputs: $X \in \mathbb{R}^{S \times d_{model}}$

2. queries, keys, values for each scaling head $i$: $Q_i, K_i, V_i \in \mathbb{R}^{S \times d_{head}}$

3. projection weights for each scaling head $i$: $W_{q,i}, W_{k,i}, W_{v,i} \in \mathbb{R}^{d_{head} \times d_{model}}$

4. projection biases for each scaling head $i$: $b_{q,i}, b_{k,i}, b_{v,i} \in \mathbb{R}^{d_{head}}$

5. fixed (i.e. not trainable) decay scalars for each scaling head $i$: $\gamma_i \in \mathbb{R}$

6. imaginary parameters for each scaling head $i$: $\theta_i \in \mathbb{R}^{d_{head}}$

7. gate weight and bias: $W_g \in \mathbb{R}^{d_{model} \times d_{model}}$ and $b_g \in \mathbb{R}^{d_{model}}$

8. output projection weight and bias: $W_p \in \mathbb{R}^{d_{model} \times n_{head} d_{head}}$ and $b_p \in \mathbb{R}^{d_{model}}$

Note, the decay scalar $\gamma_i$ is actually a vector but they simplified it to a scalar.

[SDH$^+$23] introduce Retention by starting from a linear recurrence similar to $s_{t+1} = As_t + u_t$, where $s_t \in \mathbb{R}^d$ is the state vector, $A \in \mathbb{R}^{d \times d}$ is the recurrent matrix and $u_t \in \mathbb{R}^d$ is some input at time $t$, and show how this recurrence is represented in a parallel formulation. The core of this derivation is the diagonalization the real recurrent matrix $A \in \mathbb{R}^{d \times d}$ in the complex domain to $A = P\Lambda P^\mathsf{T}$, where $P \in \mathbb{C}^{d \times d}$ is an invertible matrix and $\Lambda = \mathrm{diag}(\lambda_1, \lambda_2, \dots, \lambda_d) \in \mathbb{C}^{d \times d}$. A similar derivation is also used in [OSG$^+$23], which studies design choices in RNNs in order to understand the performance of deep State Space models. Since in this text we aim to show the connection of Retention with Attention and Linear Attention, we skip the details of this derivation.

### 1.5.1 Parallel and Recurrent Representation of Retention

The Retention layer takes as input a sequence of tokens $x_t \in \mathbb{R}^{d_{\mathrm{model}}}$ with $t = 1\dots S$, stacked into an input matrix $X \in \mathbb{R}^{S \times d_{\mathrm{model}}}$. Similar to Attention (Section 1.2), the inputs are projected by linear layers for each scaling head $i = 1\dots n_{\mathrm{head}}$ into queries, keys and values. Additionally, the queries and keys are modulated by pointwise multiplication of the imaginary part $\mathrm{Im}(\lambda_k)$ of the complex eigenvalues of A. It follows

$$Q_i = (XW_{q,i}^\mathsf{T} + b_{q,i}) \odot \Theta \in \mathbb{C}^{S \times d_{\mathrm{head}}}, \tag{1.30}$$

$$K_i = (XW_{k,i}^\mathsf{T} + b_{k,i}) \odot \overline{\Theta} \in \mathbb{C}^{S \times d_{\mathrm{head}}}, \tag{1.31}$$

$$V_i = XW_{v,i}^\mathsf{T} + b_{v,i} \in \mathbb{R}^{d_{\mathrm{head}} \times d_{\mathrm{model}}}, \tag{1.32}$$

where $W_{q,i}, W_{k,i}, W_{v,i} \in \mathbb{R}^{d_{\mathrm{head}} \times d_{\mathrm{model}}}$ are the weights and $b_{q,i}, b_{k,i}, b_{v,i} \in \mathbb{R}^{d_{\mathrm{head}}}$ are the biases of the linear layers. The complex modulation matrix $\Theta$ and its complex conjugate $\overline{\Theta}$ are defined as

$$\Theta = \begin{pmatrix} \text{---} & e^{j \cdot 1 \cdot \theta_i^\mathsf{T}} & \text{---} \\ \text{---} & e^{j \cdot 2 \cdot \theta_i^\mathsf{T}} & \text{---} \\ & \vdots & \\ \text{---} & e^{j \cdot S \cdot \theta_i^\mathsf{T}} & \text{---} \end{pmatrix} \in \mathbb{R}^{S \times d_{\mathrm{head}}}, \tag{1.33}$$

where $j$ is the imaginary unit and $\theta_i \in \mathbb{R}^{d_{\mathrm{head}}}$ parameterize the imaginary part $\mathrm{Im}(\lambda_k)$ of the complex eigenvalues of A.

The parallel version of Retention for a single scaling head $i$ is then defined as

$$\mathrm{Retention}(Q_i, K_i, V_i, \gamma_i) = \left( \frac{Q_i K_i^\mathsf{T}}{\sqrt{d_{\mathrm{head}}}} \odot D_i \right) V_i = (\widetilde{C}_i \odot D_i) V_i = C_{R,i} V_i \tag{1.34}$$

where the entries $d_{lm} \in \mathbb{R}$ of $D \in \mathbb{R}^{S \times S}$ are computed as

$$d_{lm} = \begin{cases} 0, & m > l, \\ \gamma_i^{l-m}, & m \le l \end{cases} \tag{1.35}$$

with the decay parameter $\gamma_i \in \mathbb{R}$ for head $i$. This *decay matrix D* combines causal masking with exponential decay and looks as follows (omitting the head index $i$ for simplicity)

$$D = \begin{pmatrix} 1 & 0 & 0 & 0 & \cdots & 0 \\ \gamma & 1 & 0 & 0 & \cdots & 0 \\ \gamma^2 & \gamma & 1 & 0 & \cdots & 0 \\ \gamma^3 & \gamma^2 & \gamma & 1 & \cdots & 0 \\ \vdots & \vdots & \vdots & \ddots & \ddots & \vdots \\ \gamma^{S-1} & \gamma^{S-2} & \gamma^{S-3} & \cdots & \gamma & 1 \end{pmatrix} \in \mathbb{R}^{S \times S}. \tag{1.36}$$

We observe, that the Retention mechanism is essentially Self-Attention without the softmax($\cdot$) (compare Equation (1.7) to (1-U)). Instead of the normalized combination matrix $C_{SA}$, Retention uses the unnormalized combination matrix $\tilde{C}$ to combine the values V. As a consequence, the outputs V' are no longer a convex combination of the inputs V.

By neglecting the complex valued queries and keys, one can also interpret Retention as a simplified variant of Linear Attention, where one discards the feature functions $\phi(\cdot)$ or sets them to the identity function.

**Recurrent Representation of Retention**

Analog to Linear Attention, Retention can be formulated as an RNN. since it does not apply the softmax(.) on the $QK^T$ matrix (see Section 1.2.3. By defining the memory slate matrix $s \in \mathbb{C}^{d_{\text{head}} \times d_{\text{head}}}$, the recurrence for $t = 1...S$ is

$$s_0 = 0, \tag{1.37}$$

$$s_{t+1} = \gamma s_t + k_t v_t^\top, \tag{1.38}$$

$${v'_{t+1}}^\top = q_t^\top s_{t+1}, \tag{1.39}$$

where

$$q_t, k_t \in \mathbb{C}^{d_{\text{head}}} \text{ and } v_t \in \mathbb{R}^{d_{\text{head}}}.$$

**Retention Score Normalization**

In order to make the Retention mechanism more numerically stable, they introduce two additional normalizations to Equation 1.34. First, they replace the decay matrix D by $\tilde{D}$ with

$$\tilde{d}_{lm} = \frac{d_{lm}}{\sqrt{\sum_{i=1}^{l} d_{li}}}. \tag{1.40}$$

Second, denoting the entries of $C_R$ by $c_{lm}$, the normalized the Retention combination matrix $\tilde{C}_R$ is given by

$$\tilde{c}_{lm} = \frac{c_{lm}}{\max\left(\left|\sum_{i=1}^{l} c_{li}\right|, 1\right)}. \tag{1.41}$$

Note, this normalization is not yet applied to the recurrent formulation in equations (1.37 - 1.39). In order to obtain the analogous recurrent version, one needs to add another normalizer state as in Linear Attention (see Section 1.4.1).

**1.5.2 Gated Multi-Scale Retention**

Similar to Multi-Head Attention, Retention uses $n_{\text{head}}$ different heads of dimension $d_{\text{head}} = {d_{\text{model}}}/{n_{\text{head}}}$. with different d ecay f actors $\gamma$ in parallel, too. Hence the name *Multi-Scale* Retention. In addition, they add a nvish(.) gate before the output projection and normalize the output of each head separately with a Groupnorm operation.

Given the inputs $X \in \mathbb{R}^{S \times d_{\text{head}}}$, the queries, keys $Q_i, K_i \in \mathbb{C}^{S \times d_{\text{head}}}$ and the values $V_i \in \mathbb{R}^{S \times d_{\text{model}}}$ for each head $i$, the Gated Multi-Scale Retention layer NSR(X) is defined as

$$
\begin{aligned}
\gamma_i &= 1 - 2^{-5-i} \quad \text{for} \quad i = 0, 1, \ldots, n_{\text{head}} - 1 \\
G &= \text{swish}(X W_g^\top + b_g) \in \mathbb{R}^{S \times d_{\text{model}}} \\
\text{head}_i &= \text{Retention}(Q_i, K_i, V_i, \gamma_i) \\
Y &= \text{GroupNorm}_{n_{\text{head}}}(\text{Concat}(\text{head}_1, \ldots, \text{head}_{n_{\text{head}}})) \in \mathbb{R}^{S \times d_{\text{model}}} \\
\text{MSR}(X) &= (G \odot Y) W_p^\top + b_p \in \mathbb{R}^{S \times d_{\text{model}}},
\end{aligned}
\tag{1.42}
$$

where $W_g \in \mathbb{R}^{d_{\text{model}} \times d_{\text{model}}}$, $W_p \in \mathbb{R}^{d_{\text{model}} \times n_{\text{head}} d_{\text{head}}}$ are learnable weights, $b_g, b_p \in \mathbb{R}^{d_{\text{model}}}$ are learnable biases and $\gamma_i \in \mathbb{R}$

are fixed, non-learnabledecpy parameters.

In their experiments they observed that using lees heads with a higher head dimension compared to Multi-Head Attention performed better.

GroupNorm

The Groupnorm is very similar to Layernorm. Instead of computing the statistics on the full dimension $d$ of an embedding it divides d into $n_{group}$ of dimension $d_{group} = d/n_{group}$ and keeps track of the group statistics separately. Since the scaling and offset parameters in Layernorm operate pointwise, they operate in the same way as in Layernorm. In our case each group corresponds to one head.

## 1.6 LSTM

In this section we revise the formulas of the Long-Short Term Memory (LSTM).

Note: We slightly deviate from the original notation in two points:

- Instead of $t - 1$ and $t$ we use $t$ and $t + 1$.

- With $f_t$, $i_t$, $z_t$, $o_t$ we refer to the respective gate PRE-activation instead of the activated gate values. The reason for this is to make the respective activation function visible in the recurrent formulas. This simplifies further modifications, such as the max-trick for example.

- We denote the hidden state with $h_t$, instead of $y_t$. The vLSTM and sLSTM has multiple heads. There we denote $y_t$ as output of the concatenated and projected head, i.e. the output of the full layer.

The components of the LSTM layer with hidden dimension $d_h$ and input dimension $d_{in}$ are:

1. input as timestep $t$: $x_t \in \mathbb{R}^{d_{in}}$

2. hidden state at timestep $t$: $h_t \in \mathbb{R}^{d_h}$

S. memory cell state at timestep $t$: $c_t \in \mathbb{R}^{d_h}$

4. forgetgate at timestep $t$: preactivation $f_t \in \mathbb{R}^{d_h}$, activation $\tilde{f}_t \in \mathbb{R}^{d_h}$

5. inputgate at timestep $t$: preactivation $i_t \in \mathbb{R}^{d_h}$, activation $\tilde{i}_t \in \mathbb{R}^{d_h}$

6. cellgate at timestep $t$: preactivation $z_t \in \mathbb{R}^{d_h}$, activation $\tilde{z}_t \in \mathbb{R}^{d_h}$

7. outputgate at timestep $t$: preactivalion $o_t \in \mathbb{R}^{d_h}$, activation $\tilde{o}_t \in \mathbb{R}^{d_h}$

8. input weights: $W_g \in \mathbb{R}^{d_h \times d_{in}}$ for $g \in \{f, i, z, o\}$

9, recurrent weights: $R_g \in \mathbb{R}^{d_h \times d_h}$ for $g \in \{f, i, z, o\}$

10. biases: $b_g \in \mathbb{R}^{d_h}$ for $g \in \{f, i, z, o\}$

The activation function used in the LSTM are the sigmoid $\sigma(\cdot)$ and the tanh$(\cdot)$ function:

$$\sigma(x) = \frac{1}{1 + e^{-x}} = \frac{e^x}{1 + e^x} \qquad (1.43)$$

$$\tanh(x) = \frac{e^x - e^{-x}}{e^x + e^{-x}} \tag{1.44}$$

### 1.6.1 Forward Pass

The gate pre-activations are

$$g_t = x_t W_g^\top + h_t R_g^\top + b_g \quad \text{for} \quad g \in \{f, i, z, o\} \quad \in \mathbb{R}^{d_h}. \tag{1.45}$$

The memory cell forward updates are

$$c_{t+1} = \sigma(f_t) \odot c_t + \sigma(i_t) \odot \tanh(z_t) \qquad \in \mathbb{R}^{d_h}, \tag{1.46}$$

$$h_{t+1} = \sigma(o_t) \odot \tanh(c_{t+1}) \qquad \in \mathbb{R}^{d_h}. \tag{1.47}$$

Using the gate activations we get

$$c_{t+1} = \tilde{f}_t \odot c_t + \tilde{i}_t \odot \tilde{z}_t, \tag{1.48}$$

$$h_{t+1} = \tilde{o}_t \odot \tanh(c_{t+1}). \tag{1.49}$$

### 1.7 Vectorized LSTM (vLSTM)

In this section we introduce the *Vectorized LSTM (vLSTM)*. It combines features of the orignal LSTM, Soft max-Attention, Linear Attention and Retention. Analog to Softmax-Attention it projects the inputs $X \in \mathbb{R}^{S \times d_{model}}$ into queries, keys and values $Q, K, V \in \mathbb{R}^{S \times d_{head}}$ and operates on $n_{head}$ heads in parallel. Similar to Linear Attention and Retention we remove the softmax function to enable a recurrent formulation for the vLSTM. In order to regain the expressivity of Softmax-Attention and to introduce nonlinearities, the vLSTM uses a similar gating mechanism with forget, input and output gates as the original LSTM. The difference to the LSTM is that its memory cells (i.e. entries in the memory cell vector $c_t$) are vectors, which results in a matrix state memory cell $c_t \in \mathbb{R}^{d_{head} \times d_{head}}$ .

The vLSTM layer has the following components:

1. inputs for $t = 1...S$: $x_t \in \mathbb{R}^{d_{model}}$ or $X \in \mathbb{R}^{S \times d_{model}}$

2. queries, keys, values for each head *l*: $Q_l, K_l, V_l \in \mathbb{R}^{S \times d_{head}}$

3. projection weights for each head *l*: $W_{q,l}, W_{k,l}, W_{v,l} \in \mathbb{R}^{d_{head} \times d_{model}}$

4. projection biases for each head *l*: $b_{q,l}, b_{k,l}, b_{v,l} \in \mathbb{R}^{d_{head}}$

5. input gate weights and bias for each head *l*: $W_{i,l} \in \mathbb{R}^{1 \times d_{model}}$ and $b_{i,l} \in \mathbb{R}$

6. forget gate weights and bias for each head *l*: $W_{f,l} \in \mathbb{R}^{1 \times d_{model}}$ and $b_{f,l} \in \mathbb{R}$

7. output gate weight and bias for each head: $W_{o,l} \in \mathbb{R}^{d_{model} \times d_{head}}$ and $b_o \in \mathbb{R}^{d_{head}}$

8. output projection weight and bias: $W_p \in \mathbb{R}^{d_{model} \times n_{head} d_{head}}$ and $b_p \in \mathbb{R}^{d_{model}}$

9. forgetgate for each head *l*: preactivation $f_{t,l} \in \mathbb{R}$, activation $\tilde{f}_t \in \mathbb{R}$

10. inputgate for each head *l*: preactivation $i_{t,l} \in \mathbb{R}$, activation $\tilde{i}_t \in \mathbb{R}$

11. outputgate for each head *l*: preactivation $o_t \in \mathbb{R}^{d_{\text{head}}}$, activation $\tilde{o}_t \in \mathbb{R}^{d_{\text{head}}}$

12. memory cell state for each head *l*: $c_{t,l} \in \mathbb{R}^{d_{\text{head}} \times d_{\text{head}}}$

13. normalizer state for each head *l*: $n_{t,l} \in \mathbb{R}^{d_{\text{head}}}$

14. hidden state for each head *l*: $h_{t,l} \in \mathbb{R}^{d_{\text{head}}}$

15. output for *t* = 1...*S*: $y_t \in \mathbb{R}^{d_{\text{model}}}$ or $Y \in \mathbb{R}^{S \times d_{\text{model}}}$

The activation function for the forget gate and output gate is the sigmoid function $\sigma(x)$ (1.43) and the input gate activation function is the exponential function $\exp(x) = e^x$.

**1.7.1 Recurrent vLSTM**

For notational simplicity we present the recurrent formulation only for a single head and drop the index *l*. In practice, each of the $n_{\text{head}}$ heads processes the inputs with a different set of weights in parallel.

Given the input $x_t \in \mathbb{R}^{d_{\text{model}}}$, the queries, keys and value projections for a single head at time step *t* = 1...*S* are

$$q_t = x_t W_q^\top + b_q \qquad\qquad \in \mathbb{R}^{d_{\text{head}}}, \qquad (1.50)$$

$$k_t = x_t W_k^\top + b_k \qquad\qquad \in \mathbb{R}^{d_{\text{head}}}, \qquad (1.51)$$

$$v_t = x_t W_v^\top + b_v \qquad\qquad \in \mathbb{R}^{d_{\text{head}}}. \qquad (1.52)$$

The input, forget and output gate preactivations are

$$i_t = x_t W_i^\top + b_i \qquad\qquad \in \mathbb{R}, \qquad (1.53)$$

$$f_t = x_t W_f^\top + b_f \qquad\qquad \in \mathbb{R}, \qquad (1.54)$$

$$o_t = x_t W_o^\top + b_o \qquad\qquad \in \mathbb{R}^{d_{\text{head}}}. \qquad (1.55)$$

The recurrent forward updates of the vLSTM use three states, namely the memory cellstate $c_t \in \mathbb{R}^{d_{\text{head}} \times d_{\text{head}}}$, the normalizer state $n_t \in \mathbb{R}^{d_{\text{head}}}$ and the hidden state $h_t \in \mathbb{R}^{d_{\text{head}}}$. Beginning with the initial states $c_0 = 0$, $n_0 = 0$ and $h_0 = 0$ the forward updates are

$$c_{t+1} = \sigma(f_t) \odot c_t + e^{i_t} \odot k_t v_t^\top \qquad\qquad \in \mathbb{R}^{d_{\text{head}} \times d_{\text{head}}}, \qquad (1.56)$$

$$n_{t+1} = \sigma(f_t) \odot n_t + e^{i_t} \odot k_t \qquad\qquad \in \mathbb{R}^{d_{\text{head}}}, \qquad (1.57)$$

$$h_{t+1}^\top = \sigma(o_t) \odot \frac{q_t^\top c_{t+1}}{q_t^\top n_{t+1}} = \sigma(o_t) \odot \frac{q_t^\top \left(\sigma(f_t) \odot c_t + e^{i_t} \odot k_t v_t^\top\right)}{q_t^\top \left(\sigma(f_t) \odot n_t + e^{i_t} \odot k_t\right)} \quad \in \mathbb{R}^{1 \times d_{head}}. \qquad (1.58)$$

Using the gate activation functions

$$\tilde{f}_t = \sigma(f_t), \quad \tilde{i}_t = e^{i_t}, \quad \tilde{o}_t = \sigma(o_t), \qquad (1.59)$$

the recurrence becomes

$$c_{t+1} = \tilde{f}_t \odot c_t + \tilde{i}_t \odot k_t v_t^\top \qquad\qquad \in \mathbb{R}^{d_{head} \times d_{head}}, \qquad (1.60)$$

$$n_{t+1} = \tilde{f}_t \odot n_t + \tilde{i}_t \odot k_t \qquad\qquad \in \mathbb{R}^{d_{head}}, \qquad (1.61)$$

$$h_{t+1}^\top = \tilde{o}_t \odot \frac{q_t^\top c_{t+1}}{q_t^\top n_{t+1}} = \tilde{o}_t \odot \frac{q_t^\top \left(\tilde{f}_t \odot c_t + \tilde{i}_t \odot k_t v_t^\top\right)}{q_t^\top \left(\tilde{f}_t \odot n_t + \tilde{i}_t \odot k_t\right)} \qquad \in \mathbb{R}^{1 \times d_{head}}. \qquad (1.62)$$

**Combining Multiple Heads** We obtain the final output $y_{t+1} \in \mathbb{R}^{d_{model}}$ by concatenating the hidden states $h_{t+1,l} \in \mathbb{R}^{d_{head}}$ of all $l = 1...n_{head}$ and projecting it with the output projection layer:

$$y_{t+1} = \begin{bmatrix} h_{t+1,1} \\ h_{t+1,2} \\ \vdots \\ h_{t+1,n_{head}} \end{bmatrix} W_p^\top + b_p \in \mathbb{R}^{d_{model}}. \qquad (1.63)$$

**Stabilized recurrence**

Since the vLSTM uses exponential input gates, we have the same numerical stability issues as the naive softmax computation (see Equation 1.18): Due to the exponential function the term $e^i$ can run into over- or underflow when the floating point precision is limited. To avoid these issues we can apply the same idea as [MG18] (see Section 1.3) and introduce a max state $m_t$ that especially prevents overflow (avoids large input arguments to $\exp(\cdot)$) as this would result in NaNs during training.

The stabilized version can be derived in throe steps. At first we use the identity $\sigma(f_t) = e^{\log(\sigma(ft))}$, extend the fraction in equation (1.62) by $e^{-m_{t+1}}$ and select $m_{t+1} = \max(\log(\sigma(f_t), i_t)$ to be the maximum of the two arguments of the $\exp(\cdot)$ functions. In this way we ensure that the arguments of $\exp(\cdot)$ are always smaller than 1, such that overflow can never occur. Underflow can sill occur but this is not such an issue here.

$$h_{t+1}^\top = \sigma(o_t) \odot \frac{q_t^\top c_{t+1} \cdot e^{-m_{t+1}}}{q_t^\top n_{t+1} \cdot e^{-m_{t+1}}} = \sigma(o_t) \odot \frac{q_t^\top \left(e^{\log(\sigma(f_t))} \odot c_t + e^{i_t} \odot k_t v_t^\top\right) \cdot e^{-m_{t+1}}}{q_t^\top \left(e^{\log(\sigma(f_t))} \odot n_t + e^{i_t} \odot k_t\right) \cdot e^{-m_{t+1}}}$$
$$= \sigma(o_t) \odot \frac{q_t^\top \left(e^{\log(\sigma(f_t))-m_{t+1}} \odot c_t + e^{i_t - m_{t+1}} \odot k_t v_t^\top\right)}{q_t^\top \left(e^{\log(\sigma(f_t))-m_{t+1}} \odot n_t + e^{i_t - m_{t+1}} \odot k_t\right)} \qquad (1.64)$$

As next step we reparameterize $c_t$ and $n_t$ to $\tilde{c}_t$ and $\tilde{n}_t$:

$$\tilde{c}_{t+1} = c_{t+1} e^{-m_{t+1}} \Rightarrow \tilde{c}_t = c_t e^{-m_t} \Leftrightarrow c_t = \tilde{c}_t e^{m_t},$$
$$\tilde{n}_{t+1} = n_{t+1} e^{-m_{t+1}} \Rightarrow \tilde{n}_t = n_t e^{-m_t} \Leftrightarrow n_t = \tilde{n}_t e^{m_t}. \qquad (1.65)$$

Finally, we replace $c_t$ and $n_t$ in the recurrence by $\tilde{c}_t$ and $\tilde{n}_t$:

$$h_{t+1}^\top = \sigma(o_t) \odot \frac{q_t^\top \left( e^{\log(\sigma(f_t)) - m_{t+1}} \odot \tilde{c}_t e^{m_t} + e^{i_t - m_{t+1}} \odot k_t v_t^\top \right)}{q_t^\top \left( e^{\log(\sigma(f_t)) - m_{t+1}} \odot \tilde{n}_t e^{m_t} + e^{i_t - m_{t+1}} \odot k_t \right)}$$

$$= \sigma(o_t) \odot \frac{q_t^\top \left( e^{\log(\sigma(f_t)) + m_t - m_{t+1}} \odot \tilde{c}_t + e^{i_t - m_{t+1}} \odot k_t v_t^\top \right)}{q_t^\top \left( e^{\log(\sigma(f_t)) + m_t - m_{t+1}} \odot \tilde{n}_t + e^{i_t - m_{t+1}} \odot k_t \right)} \quad (1.66)$$

$$= \sigma(o_t) \odot \frac{q_t^\top \tilde{c}_{t+1}}{q_t^\top \tilde{n}_{t+1}}$$

## Modified normalizer

In our experiments we observed that the normalizer $q_t^\top n_{t+1}$ in equation (1.62) can cause high gradient variance and gradient explosion after a fow steps of training

The reason for this is that sign flip of $q_t^\top n_{t+1}$ from one time step to another can cause the a sign flip of the overall fraction and hence $h_{t+1}^\top$. Since we want the sign of $h_{t+1}^\top$ to be fully determined by the numerator, we choose to take the absolute value $|q_t^\top n_{t+1}|$ in the denominator.

Another potential issue can occur, if the denominator $|q_t^\top n_{t+1}|$ becomes very small. Then the overall fraction $h_{t+1}^\top$ will explode, which leads again to unstable training behavior. In order to avoid this we take the maximum of $|q_t^\top n_{t+1}|$ and 1.0, i.e.

$$h_{t+1}^\top = \sigma(o_t) \odot \frac{q_t^\top c_{t+1}}{\max(|q_t^\top n_{t+1}|, 1.0)} \quad (1.67)$$

We also tried other normalizer options, but this normalizer choice yielded the best empirical performance

## vLSTM recurrence

Combining the stabilized version with the modified normalizer we get the following final recurrence for the vLSTM for a single head: Beginning with the initial states $c_0 = 0$, $n_0 = 0$, $m_0 = 0$ and $h_0 = 0$ the forward updates are

$$m_{t+1} = \max\left(\log \sigma(f_t) + m_t, i_t\right) \qquad \in \mathbb{R}, \quad (1.68)$$

$$c_{t+1} = e^{\log \sigma(f_t) + m_t - m_{t+1}} \odot c_t + e^{i_t - m_{t+1}} \odot k_t v_t^\top \qquad \in \mathbb{R}^{d_{head} \times d_{head}}, \quad (1.69)$$

$$n_{t+1} = e^{\log \sigma(f_t) + m_t - m_{t+1}} \odot n_t + e^{i_t - m_{t+1}} \odot k_t \qquad \in \mathbb{R}^{d_{head}}, \quad (1.70)$$

$$h_{t+1}^\top = \sigma(o_t) \odot \frac{q_t^\top c_{t+1}}{\max\left(|q_t^\top n_{t+1}|, e^{-m_{t+1}}\right)} \qquad \in \mathbb{R}^{1 \times d_{head}}. \quad (1.71)$$

## 1.7.2 Parallel vLSTM

We can also write down the vLSTM formulas in parallel form. Instead of processing each input $x_t \in \mathbb{R}^{d_{model}}$ timestep-per-timestep, it processes all timesteps in a full sequence $X \in \mathbb{R}^{S \times d_{model}}$ in parallel. This is exactly how Attention and the parallel formulation of Retention processes its inputs (see Section 1.2 and 1.5).

As in Section 1.7.1 we present the formulas for a single head and drop the index *l* for notational simplicity. For each head $l = 1...n_{head}$ we project the inputs into queries, keys and values

$$Q = XW_q^\top + b_q \in \mathbb{R}^{S \times d_{head}}, \quad (1.72)$$

$$K = XW_k^\top + b_k \in \mathbb{R}^{S \times d_{head}}, \quad (1.73)$$

$$V = XW_v^\top + b_v \in \mathbb{R}^{S \times d_{head}}, \tag{1.74}$$

where $W_q, W_k, W_v \in \mathbb{R}^{d_{head} \times d_{model}}$ are the weights and $b_q, b_k, b_v \in \mathbb{R}^{d_{head}}$ are the biases of the linear layers.

For a single head we compute the input gate preactivation vector $\hat{I}$, the forget preactivation vector $\hat{F}$ and the outputgate preactivation $O$ by

$$\hat{I} = XW_i^\top + b_i \qquad\qquad \in \mathbb{R}^{S \times 1}, \tag{1.75}$$

$$\hat{F} = XW_f^\top + b_f \qquad\qquad \in \mathbb{R}^{S \times 1}, \tag{1.76}$$

$$O = XW_o^\top + b_o \qquad\qquad \in \mathbb{R}^{S \times d_{head}}. \tag{1.77}$$

We then reshape the input gate preactivation vector $\hat{I} \in \mathbb{R}^{S \times 1}$ such that we get the input gate preactivation matrix $I \in \mathbb{R}^{S \times S}$. Applying a causal mask similar to causal Self-Attention (see Section 1.2.2). we get the input gate preactivation matrix as

$$I = \begin{pmatrix} i_1 & 0 & 0 & \dots & 0 \\ i_1 & i_2 & 0 & \dots & 0 \\ i_1 & i_2 & i_3 & \dots & 0 \\ \vdots & \vdots & \vdots & \ddots & \vdots \\ i_1 & i_2 & i_3 & \dots & i_S \end{pmatrix} \in \mathbb{R}^{S \times S}. \tag{1.78}$$

The forget gate matrix needs a little bit more attention. In the recurrent formulation we apply the forgetgate $\sigma(f_t)$ to the memory cell state $c_t$ (i.e. the aggregation of the full history). This is the same as decaying each individual timestep from 0 to $t$ - 1 with the current forget gate $f_t$. Since we process each individual timestep in parallel, and accumulate via a matrix product we need to apply the the current forget gate $f_t$ to all previous ones. We do this by constructing the forgetgate activation matrix $\tilde{F} \in \mathbb{R}^{S \times S}$ as

$$\tilde{F} = \begin{pmatrix} 1 & 0 & 0 & 0 & \dots & 0 \\ \sigma(f_2) & 1 & 0 & 0 & \dots & 0 \\ \sigma(f_2)\sigma(f_3) & \sigma(f_3) & 1 & 0 & \dots & 0 \\ \sigma(f_2)\sigma(f_3)\sigma(f_4) & \sigma(f_3)\sigma(f_4) & \sigma(f_4) & 1 & \dots & 0 \\ \vdots & \vdots & \vdots & \ddots & \ddots & \vdots \\ \sigma(f_2)\sigma(f_3)\dots\sigma(f_S) & \sigma(f_3)\dots\sigma(f_S) & \sigma(f_4)\dots\sigma(f_S) & \dots & \sigma(f_S) & 1 \end{pmatrix} \in \mathbb{R}^{S \times S}. \tag{1.79}$$

In product notation the forgetgate activation matrix is defined as

$$\tilde{F}_{ij} = \begin{cases} 0 & \text{for } j > i \\ 1 & \text{for } j = i \\ \prod_{k=j+1}^{i} \sigma(f_k) & \text{for } j < i \end{cases} \tag{1.80}$$

**Naive gate matrix** In order to apply forget and input gates in the parallel formulation we combine the forgetgate activation matrix $\tilde{F} \in \mathbb{R}^{S \times S}$ and the input gate preactivation matrix $I \in \mathbb{R}^{S \times S}$ and obtain the gate matrix

$$D = \tilde{F} \odot \exp(I) \in \mathbb{R}^{S \times S}. \tag{1.81}$$

This equation has the same numerical issues as the recurrent version from Section 1.7.1, due to the exponential term exp($I$).

**Stabilized gate matrix** We can get a numerically stable gate matrix by taking the logarithm of $D$ and subtracting either the overall or the row-wise maximum entry of $D$:

$$\tilde{D} = \log D = \log \tilde{F} \odot I, \tag{1.82}$$

$$D = \exp(\tilde{D} - \max \tilde{D}) \in \mathbb{R}^{S \times S}. \qquad (1.83)$$

**vLSTM** parallel

The hidden states $H \in \mathbb{R}^{S \times d_{head}}$ are given by the parallel formulation of the vLSTM as

$$H = \sigma(O) \odot C \, V, \quad \text{where } C = \frac{\tilde{C}}{\sum_{j=1}^{S} \tilde{C}_{ij}}, \text{ and } \tilde{C} = QK^{\top} \odot D. \qquad (1.84)$$

In equation 1.84 $C \in \mathbb{R}^{S \times S}$ denotes the normalized combination matrix. $\tilde{C} \in \mathbb{R}^{S \times S}$ the unnormalized combination matrix and $\sigma(O) \in \mathbb{R}^{S \times d_{head}}$ the output gates.

The modification in equation (1.67) can be translated to the parallel formulation by changing the definition of the comobination matrix $C \in \mathbb{R}^{S \times \xi}$ to

$$C = \frac{\tilde{C}}{\max\left(|\sum_{j=1}^{S} \tilde{C}_{ij}|, 1.0\right)}, \qquad (1.85)$$

for the non-stabilized version, and to

$$C = \frac{\tilde{C}}{\max\left(|\sum_{j=1}^{S} \tilde{C}_{ij}|, e^{-\max \tilde{D}}\right)} \qquad (1.86)$$

for the stabilized version.

Similar to the recurrent vLSTM formulation (see Section 1.7.1, we obtain the outputs $Y \in \mathbb{R}^{S \times d_{model}}$ of the vLSTM for all timesteps by concatenating the hidden states $H_l \in \mathbb{R}^{S \times d_{head}}$ for each head $l = 1...n_{head}$ and projecting with the output projection layer:

$$Y = \begin{bmatrix} H_1 \\ H_2 \\ \vdots \\ H_{n_{head}} \end{bmatrix} W_p^{\top} + b_p \in \mathbb{R}^{S \times d_{model}}. \qquad (1.87)$$

**Looking deeper into the parallel vLSTM**

**Parallel computation of the Forgetgate**

In order to avoid constructing the the forgetgate matrix $F$ using a for-loop one can use...

Notes: - We see $\Theta$ can be subsumed into $W_k$ and $W_q$ - we can put in gating mechanism from LSTM - recurrent formulation is used during inference for streaming applications.

**1.8 Scalar LSTM (sLSTM)**

In this section we introduce the *Scalar LSTM (sLSTM)*. The sLSTM has a similar gating mechanism to the vLSTM. It also uses an exponential input gate, a sigmoid forget and output gate and computes multiple heads in one layer. The sLSTM is closer to the original LSTM (see Section 1.6) than the vLSTM. The reason for this is the way of how the inputs are handled and how the preactivations for the gates are computed. It does not have the three input projection into queries, keys and values followed by dot-product interaction. Instead, - similar to the original LSTM - it has recurrent weight matrices feeding the previous hidden state into the next states gate preactivations. This brings back the flavor of the original Recurrent Neural Networks, but prevents a parallel formulation as the vLSTM.

The sLSTM layer has the following components:

1. inputs for $t = 1...S$: $x_t \in \mathbb{R}^{d_{model}}$ or $X \in \mathbb{R}^{S \times d_{model}}$

2. forgetgate for each head *l*: preactivation $f_{t,l} \in \mathbb{R}^{d_{\text{head}}}$, activation $\tilde{f}_t \in \mathbb{R}^{d_{\text{head}}}$

3. inputgate for each head *l*: preactivation $i_{t,l} \in \mathbb{R}^{d_{\text{head}}}$, activation $\tilde{i}_t \in \mathbb{R}^{d_{\text{head}}}$

4. cellgate for each head *l*: preactivation $z_{t,l} \in \mathbb{R}^{d_{\text{head}}}$, activation $\tilde{z}_t \in \mathbb{R}^{d_{\text{head}}}$

5. outputgate for each head *l*: preactivation $o_t \in \mathbb{R}^{d_{\text{head}}}$, activation $\tilde{o}_t \in \mathbb{R}^{d_{\text{head}}}$

6. gate input and recurrent weights and bias for each head *l*: $W_{g,l} \in \mathbb{R}^{d_{\text{head}} \times d_{\text{model}}}$, $R_{g,l} \in \mathbb{R}^{d_{\text{head}} \times d_{\text{head}}}$, and $b_{g,l} \in \mathbb{R}^{d_{\text{head}}}$ for *g* ∈ {*f, i, z, o*}

7. output projection weight and bias: $W_p \in \mathbb{R}^{d_{\text{model}} \times n_{\text{head}} d_{\text{head}}}$ and $b_p \in \mathbb{R}^{d_{\text{model}}}$

8. memory cell state for each head *l*: $c_{t,l} \in \mathbb{R}^{d_{\text{head}}}$

9. normalizer state for each head *l*: $n_{t,l} \in \mathbb{R}^{d_{\text{head}}}$

10. hidden state for each head *l*: $h_{t,l} \in \mathbb{R}^{d_{\text{head}}}$

11. output for *t* = 1...*S*: $y_t \in \mathbb{R}^{d_{\text{model}}}$ or $Y \in \mathbb{R}^{S \times d_{\text{model}}}$

### 1.8.1 sLSTM and sLSTMhin

Analog to the vLSTM we present the sLSTM formulas for a single head and drop the index *l*. In the implementation, each of the $n_{\text{head}}$ heads processes the inputs with a different set of weights in parallel. The sLSTM processes the inputs $x_t \in \mathbb{R}^{d_{\text{model}}}$ for each timestep *t* sequentially. Together with the hidden state $x_t \in \mathbb{R}^{d_{\text{head}}}$, we compute the forget gate, input gate, cell gate and output gate pre-activations $f_t, i_t, z_t, o_t \in \mathbb{R}^{d_{\text{head}}}$ in two different ways. The result are two variants of the sLSTM:

**sLSTM** The regular sLSTM (sLSTM) uses the original LSTM pre-activation computation where the input as well as the hidden state are fed into all gate pre-activations. They are given by

$$f_t = x_t W_f^\top + h_t R_f^\top + b_f \qquad \in \mathbb{R}^{d_{\text{head}}}, \qquad (1.88)$$

$$i_t = x_t W_i^\top + h_t R_i^\top + b_i \qquad \in \mathbb{R}^{d_{\text{head}}}, \qquad (1.89)$$

$$z_t = x_t W_z^\top + h_t R_z^\top + b_z \qquad \in \mathbb{R}^{d_{\text{head}}}, \qquad (1.90)$$

$$o_t = x_t W_o^\top + h_t R_o^\top + b_o \qquad \in \mathbb{R}^{d_{\text{head}}}. \qquad (1.91)$$

**sLSTMhin** In the sLSTMhin only the hidden states $h_t$ are fed into the input gate (hence the name hin) and in no other gate. The inputs $x_t$ do not influence the input gate. Hence, the gate pre-activations are computed by

$$f_t = x_t W_f^\top + b_f \qquad \in \mathbb{R}^{d_{\text{head}}}, \qquad (1.92)$$

$$i_t = h_t R_i^\top + b_i \qquad \in \mathbb{R}^{d_{\text{head}}}, \qquad (1.93)$$

$$z_t = x_t W_z^\top + b_z \qquad \in \mathbb{R}^{d_{\text{head}}}, \qquad (1.94)$$

$$o_t = x_t W_o^\top + b_o \qquad \in \mathbb{R}^{d_{head}}. \qquad (1.95)$$

### 1.8.2 Recurrent sLSTM

By defining the memory cell state $c_t \in \mathbb{R}^{d_{head}}$, the normalizer state $n_t \in \mathbb{R}^{d_{head}}$ and the hidden state $h_t \in \mathbb{R}^{d_{head}}$, and starting with the initial slates $c_0 - 0$, $n_0 = 0$, $m_0 = 0$ and $h_0 = 0$, the sLSTM recurrence is given by

$$c_{t+1} = \sigma(f_t) \odot c_t + e^{i_t} \odot z_t \qquad \in \mathbb{R}^{d_{head}}, \qquad (1.96)$$

$$n_{t+1} = \sigma(f_t) \odot n_t + e^{i_t} \qquad \in \mathbb{R}^{d_{head}}, \qquad (1.97)$$

$$h_{t+1} = \sigma(o_t) \odot \frac{c_{t+1}}{n_{t+1}} = \sigma(o_t) \odot \frac{\sigma(f_t) \odot c_t + e^{i_t} \odot z_t}{\sigma(f_t) \odot n_t + e^{i_t}} \qquad \in \mathbb{R}^{d_{head}}. \qquad (1.98)$$

Using the gate activations

$$\tilde{f}_t = \sigma(f_t), \quad \tilde{i}_t = e^{i_t}, \quad \tilde{z}_t = z_t, \quad \tilde{o}_t = \sigma(o_t), \qquad (1.99)$$

the recurrence becomes

$$c_{t+1} = \tilde{f}_t \odot c_t + \tilde{i}_t \odot \tilde{z}_t \qquad \in \mathbb{R}^{d_{head}}, \qquad (1.100)$$

$$n_{t+1} = \tilde{f}_t \odot n_t + \tilde{i}_t \qquad \in \mathbb{R}^{d_{head}}, \qquad (1.101)$$

$$h_{t+1} = \tilde{o}_t \odot \frac{c_{t+1}}{n_{t+1}} = \tilde{o}_t \odot \frac{\tilde{f}_t \odot c_t + \tilde{i}_t \odot \tilde{z}_t}{\tilde{f}_t \odot n_t + \tilde{i}_t} \qquad \in \mathbb{R}^{d_{head}}. \qquad (1.102)$$

**Combining Multiple Heads** We obtain the final output $y_{t+1} \in \mathbb{R}^{d_{model}}$ by concatenating the hidden states $h_{t+1,l} \in \mathbb{R}^{d_{head}}$ of all $l = 1...n_{head}$ and projecting it with the output projection layer:

$$y_{t+1} = \begin{bmatrix} h_{t+1,1} \\ h_{t+1,2} \\ \vdots \\ h_{t+1,n_{head}} \end{bmatrix} W_p^\top + b_p \in \mathbb{R}^{d_{model}}. \qquad (1.103)$$

### Stabilized recurrence

The sLSTM uses exponential input gates similar to the vLSTM, which could lead to numerical instability (see Section 1.7.1). Fortunately, we can apply the same stabilization trick as for the vLSTM.

We use the identity $\sigma(f_t) = e^{\log(\sigma(f_t))}$, extend the fraction in equation (1.98) by $e^{-m_{t+1}}$ and select $m_{t+1} = \max(\log(\sigma(f_t)), i_t)$ to be the maximum of the two arguments of the $\exp(\cdot)$ functions.

$$h_{t+1} = \sigma(o_t) \odot \frac{c_{t+1} \cdot e^{-m_{t+1}}}{n_{t+1} \cdot e^{-m_{t+1}}} = \sigma(o_t) \odot \frac{(e^{\log(\sigma(f_t))} \odot c_t + e^{i_t} \odot z_t) \cdot e^{-m_{t+1}}}{(e^{\log(\sigma(f_t))} \odot n_t + e^{i_t}) \cdot e^{-m_{t+1}}}$$
$$= \sigma(o_t) \odot \frac{e^{\log(\sigma(f_t)) - m_{t+1}} \odot c_t + e^{i_t - m_{t+1}} \odot z_t}{e^{\log(\sigma(f_t)) - m_{t+1}} \odot n_t + e^{i_t - m_{t+1}}} \qquad (1.104)$$

We reparameterize $c_t$ and $n_t$ to $\tilde{c}_t$ and $\tilde{n}_t$:

$$\tilde{c}_{t+1} = c_{t+1} e^{-m_{t+1}} \Rightarrow \tilde{c}_t = c_t e^{-m_t} \Leftrightarrow c_t = \tilde{c}_t e^{m_t},$$
$$\tilde{n}_{t+1} = n_{t+1} e^{-m_{t+1}} \Rightarrow \tilde{n}_t = n_t e^{-m_t} \Leftrightarrow n_t = \tilde{n}_t e^{m_t}. \qquad (1.105)$$

Finally, we replace $c_t$ and $n_t$ in the recurrence by $\tilde{c}_t$ and $\tilde{n}_t$:

$$
\begin{aligned}
h_{t+1} &= \sigma(o_t) \odot \frac{e^{\log(\sigma(f_t)) - m_{t+1}} \odot \tilde{c}_t e^{m_t} + e^{i_t - m_{t+1}} \odot z_t}{e^{\log(\sigma(f_t)) - m_{t+1}} \odot \tilde{n}_t e^{m_t} + e^{i_t - m_{t+1}}} \\
&= \sigma(o_t) \odot \frac{e^{\log(\sigma(f_t)) + m_t - m_{t+1}} \odot \tilde{c}_t + e^{i_t - m_{t+1}} \odot z_t}{e^{\log(\sigma(f_t)) + m_t - m_{t+1}} \odot \tilde{n}_t + e^{i_t - m_{t+1}}} \\
&= \sigma(o_t) \odot \frac{\tilde{c}_{t+1}}{\tilde{n}_{t+1}}
\end{aligned}
\qquad (1.106)
$$

**sLSTM recurrence**

Using the stabilization from equation (1.106), we get the final recurrence for the sLSTM for a single head as

$$
m_{t+1} = \max\left(\log\sigma(f_t) + m_t, i_t\right) \qquad \in \mathbb{R}^{d_{\text{head}}}, \quad (1.107)
$$

$$
c_{t+1} = e^{\log\sigma(f_t) + m_t - m_{t+1}} \odot c_t + e^{i_t - m_{t+1}} \odot z_t \qquad \in \mathbb{R}^{d_{\text{head}}}, \quad (1.108)
$$

$$
n_{t+1} = e^{\log\sigma(f_t) + m_t - m_{t+1}} \odot n_t + e^{i_t - m_{t+1}} \qquad \in \mathbb{R}^{d_{\text{head}}}, \quad (1.109)
$$

$$
h_{t+1} = \sigma(o_t) \odot \frac{c_{t+1}}{n_{t+1}} = \sigma(o_t) \odot \frac{e^{\log\sigma(f_t) + m_t - m_{t+1}} \odot c_t + e^{i_t - m_{t+1}} \odot z_t}{e^{\log\sigma(f_t) + m_t - m_{t+1}} \odot n_t + e^{i_t - m_{t+1}}} \qquad \in \mathbb{R}^{d_{\text{head}}}. \quad (1.110)
$$

**1.9 xLSTM**

Transformer Decoder:

$$
S
$$
$$
d_{\text{model}}
$$
$$
n_{\text{vocab}}
$$
$$
\in \mathbb{R}^{S}
$$

$$
X \in \mathbb{R}^{S \times d_{\text{model}}}
$$

$$
X' \in \mathbb{R}^{S \times d_{\text{model}}}
$$

$$
P \in \mathbb{R}^{S \times n_{\text{vocab}}}
$$

Multi-Head Attention:

$$
n_{\text{head}}
$$

$$
X \in \mathbb{R}^{S \times d_{\text{model}}}
$$

$$
Y \in \mathbb{R}^{S \times d_{\text{model}}}
$$
$$
(S, n_{\text{head}} \times d_{\text{head}})
$$

Self Attention:

$$D = \begin{pmatrix} 1 & 0 & \cdots \\ 1 & 1 & \cdots \\ \vdots & \vdots & \ddots \end{pmatrix} \in \mathbb{R}^{S \times S}$$

$$Q, K, V \in \mathbb{R}^{S \times d_{\text{head}}}$$

$$q_t, k_t, v_t \in \mathbb{R}^{d_{\text{head}}}$$
$$(S \times S)$$
$$(S \times d_{\text{head}})$$

$$\text{SelfAttention}(Q, K, V) = \left( \text{softmax} \left( \frac{QK^\top}{\sqrt{d_{\text{head}}}} \right) \odot D \right) V$$

$$\text{softmax}\left(QK^\top\right) V = \text{softmax} \left( \begin{pmatrix} q_1^\top \\ \vdots \\ q_S^\top \end{pmatrix} \begin{pmatrix} k_1 & \cdots & k_S \end{pmatrix} \right) \begin{pmatrix} v_1^\top \\ \vdots \\ v_S^\top \end{pmatrix}$$

$$= \text{softmax} \begin{pmatrix} q_1^\top k_1 & q_1^\top k_2 & \cdots & q_1^\top k_S \\ q_2^\top k_1 & q_2^\top k_2 & \cdots & q_2^\top k_S \\ \vdots & \vdots & \ddots & \vdots \\ q_S^\top k_1 & q_S^\top k_2 & \cdots & q_S^\top k_S \end{pmatrix} \begin{pmatrix} v_1^\top \\ v_2^\top \\ \vdots \\ v_S^\top \end{pmatrix}$$

$$= C\,V$$

QKV-Product:

$$V' = (Q\,K^\top)\,V$$

$$= \left( \begin{pmatrix} q_1^\top \\ \vdots \\ q_S^\top \end{pmatrix} \begin{pmatrix} k_1 & \cdots & k_S \end{pmatrix} \right) \begin{pmatrix} v_1^\top \\ \vdots \\ v_S^\top \end{pmatrix}$$

$$= \begin{pmatrix} q_1^\top k_1 & q_1^\top k_2 & \cdots & q_1^\top k_S \\ q_2^\top k_1 & q_2^\top k_2 & \cdots & q_2^\top k_S \\ \vdots & \vdots & \ddots & \vdots \\ q_S^\top k_1 & q_S^\top k_2 & \cdots & q_S^\top k_S \end{pmatrix} \begin{pmatrix} v_1^\top \\ v_2^\top \\ \vdots \\ v_S^\top \end{pmatrix}$$

$$\begin{pmatrix} v_1'^\top \\ v_2'^\top \\ \vdots \\ v_S'^\top \end{pmatrix} = \begin{pmatrix} (q_1^\top k_1)v_1^\top + (q_1^\top k_2)v_2^\top + \cdots + (q_1^\top k_S)v_S^\top \\ (q_2^\top k_1)v_1^\top + (q_2^\top k_2)v_2^\top + \cdots + (q_2^\top k_S)v_S^\top \\ \vdots \\ (q_S^\top k_1)v_1^\top + (q_S^\top k_2)v_2^\top + \cdots + (q_S^\top k_S)v_S^\top \end{pmatrix}$$

$$V' = (Q\,K^\top \odot D)\,V$$

QKDV-Product:

$$V' = (Q\,K^\top \odot D)\,V$$

$$\begin{pmatrix} v_1'^{\top} \\ v_2'^{\top} \\ \vdots \\ v_S'^{\top} \end{pmatrix} = \begin{pmatrix} (q_1^{\top} k_1) v_1^{\top} \\ (q_2^{\top} k_1) v_1^{\top} + (q_2^{\top} k_2) v_2^{\top} \\ \vdots \\ (q_S^{\top} k_1) v_1^{\top} + (q_S^{\top} k_2) v_2^{\top} + \cdots + (q_S^{\top} k_S) v_S^{\top} \end{pmatrix}$$

$$= \begin{pmatrix} q_1^{\top} (k_1 v_1^{\top}) \\ q_2^{\top} (k_1 v_1^{\top} + k_2 v_2^{\top}) \\ \vdots \\ q_S^{\top} (k_1 v_1^{\top} + k_2 v_2^{\top} + \cdots + k_S v_S^{\top}) \end{pmatrix}$$

$$(q_i^{\top} k_j) v_j^{\top} = q_i^{\top} (k_j v_j^{\top})$$

$$v_t'^{\top} = q_t^{\top} \sum_{j=1}^{t} k_j v_j^{\top}$$

Softmax:

$$x \in \mathbb{R}^d$$

$$x = [x_1, x_2, \ldots, x_{d-1}, x_d] \in \mathbb{R}^d$$

$$(\text{softmax}(x))_i = \frac{e^{x_i}}{e^{x_1} + e^{x_2} + \ldots + e^{x_d}} = \frac{e^{x_i}}{n}$$

$$(\text{softmax}(x))_i = \frac{e^{x_i - \max_{k=1}^d x_k}}{e^{x_1 - \max_{k=1}^d x_k} + \ldots + e^{x_d - \max_{k=1}^d x_k}} = \frac{e^{x_i - m}}{n}$$

$$n = \sum_{j=1}^{d} e^{x_j}$$

$$n = \sum_{j=1}^{d} e^{x_j - m}$$

$$m = \max_{k=1}^{d} x_k$$

$$v_t'^{\top} = \sum_{i=1}^{t} \frac{e^{q_t^{\top} k_i} v_i^{\top}}{e^{q_t^{\top} k_1} + e^{q_t^{\top} k_2} + \ldots + e^{q_t^{\top} k_t}} = \sum_{i=1}^{t} \frac{e^{q_t^{\top} k_i}}{\sum_{j=1}^{t} e^{q_t^{\top} k_j}} v_i^{\top}$$

$$v_t'^{\top} = \sum_{i=1}^{t} \frac{e^{q_t^{\top} k_i}}{\sum_{j=1}^{t} e^{q_t^{\top} k_j}} v_i^{\top}$$

Online Softmax:

**Algorithm 2 "Online Softmax"**

```
 1: procedure OnlineNormalizerSoftmax(x)                              ▷ x ∈ ℝᵈ
 2:     m₀ = − inf
 3:     n₀ = 0
 4:     for i = 1 to d do
 5:         mᵢ = max(mᵢ₋₁, xᵢ)
 6:         nᵢ = nᵢ₋₁ · e^{mᵢ₋₁−mᵢ} + e^{xᵢ−mᵢ}
 7:     end for
 8:     for i = 1 to d do
 9:         (softmax(x))ᵢ = e^{xᵢ−m_d} / n_d
10:     end for
11: end procedure
```

$$m = \max(m_A, m_B),$$

$$n = n_A \cdot e^{m_A - \max(m_A, m_B)} + n_B \cdot e^{m_B - \max(m_A, m_B)},$$

original LSTM:

$$W_g \in \mathbb{R}^{d_{head} \times d_{model}} \quad \text{for } g \in \{f, i, z, o\}$$

$$R_g \in \mathbb{R}^{d_{head} \times d_{head}} \quad \text{for } g \in \{f, i, z, o\}$$

$$b_g \in \mathbb{R}^{d_{head}} \quad \text{for } g \in \{f, i, z, o\}$$

$d_{in}$

$$\text{forget gate } f_t \in \mathbb{R}^{d_{head}}$$

$$\text{input gate } i_t \in \mathbb{R}^{d_{head}}$$

$$\text{cell gate } z_t \in \mathbb{R}^{d_{head}}$$

$$\text{output gate } o_t \in \mathbb{R}^{d_{head}}$$

$$\text{forget gate: } \tilde{f}_t = \sigma(f_t)$$

$$\text{input gate: } \tilde{i}_t = \sigma(i_t)$$

$$\text{cell gate: } \tilde{z}_t = \tanh(z_t)$$

$$\text{output gate: } \tilde{o}_t = \sigma(o_t)$$

$$\text{memory cell state: } c_t \in \mathbb{R}^{d_{head}}$$

$$\text{hidden state: } h_t \in \mathbb{R}^{d_{head}}$$

$$\widetilde{f}_t = \sigma(f_t), \quad \widetilde{i}_t = \sigma(i_t)$$

$$\widetilde{z}_t = \tanh(z_t), \quad \widetilde{o}_t = \sigma(o_t)$$

$$f_t, i_t, z_t, o_t \in \mathbb{R}^{d_{\mathrm{head}}}$$

$$c_t, h_t \in \mathbb{R}^{d_{\mathrm{head}}}$$

$$c_{t+1}, h_{t+1} \in \mathbb{R}^{d_{\mathrm{head}}}$$

$$g_t = x_t W_g^\top + h_t R_g^\top + b_g \quad \text{for } g \in \{f, i, z, o\} \in \mathbb{R}^{d_{\mathrm{head}}}$$

$$c_{t+1} = \sigma(f_t) \odot c_t + \sigma(i_t) \odot \tanh(z_t) \qquad\qquad \in \mathbb{R}^{d_{\mathrm{head}}}$$

$$h_{t+1} = \sigma(o_t) \odot \tanh(c_{t+1}) \qquad\qquad \in \mathbb{R}^{d_{\mathrm{head}}}$$

$$c_{t+1} = \widetilde{f}_t \odot c_t + \widetilde{i}_t \odot \widetilde{z}_t$$

$$h_{t+1} = \widetilde{o}_t \odot \tanh(c_{t+1})$$

vLSTM recurrent:

$$x_t \in \mathbb{R}^{d_{\mathrm{model}}}$$

$$y_t \in \mathbb{R}^{d_{\mathrm{model}}}$$

$$Q, K, V \in \mathbb{R}^{S \times d_{\mathrm{head}}}$$

$$q_t, k_t, v_t \in \mathbb{R}^{d_{\mathrm{head}}}$$

$$W_g \in \mathbb{R}^{1 \times d_{\mathrm{model}}} \quad \text{for } g \in \{f, i\}$$

$$b_g \in \mathbb{R} \quad \text{for } g \in \{f, i\}$$

$$W_f, W_i \in \mathbb{R}^{1 \times d_{\mathrm{model}}}$$

$$b_f, b_i \in \mathbb{R}$$

$$W_o \in \mathbb{R}^{d_{\mathrm{head}} \times d_{\mathrm{model}}}$$

$$b_o \in \mathbb{R}^{d_{\mathrm{head}}}$$

$$\text{forget gate} \quad f_t = x_t W_f^\top + b_f \in \mathbb{R}$$

$$\text{input gate } i_t = x_t W_i^\top + b_i \ \in \ \mathbb{R}$$

$$\text{output gate } o_t = x_t W_o^\top + b_o \ \in \ \mathbb{R}^{d_{head}}$$

$$\text{queries } q_t \in \mathbb{R}^{d_{head}}$$

$$\text{keys } k_t \in \mathbb{R}^{d_{head}}$$

$$\text{values } v_t \in \mathbb{R}^{d_{head}}$$

$$\text{memory cell state } c_t \in \mathbb{R}^{d_{head} \times d_{head}}$$

$$\text{normalizer state } n_t \in \mathbb{R}^{d_{head}}$$

$$\text{hidden state } h_t \in \mathbb{R}^{d_{head}}$$

$$\tilde{f}_t = \sigma(f_t), \quad \tilde{i}_t = e^{i_t}, \quad \tilde{o}_t = \sigma(o_t)$$

$$c_{t+1} = \sigma(f_t) \odot c_t + e^{i_t} \odot k_t v_t^\top \qquad\qquad \in \mathbb{R}^{d_{head} \times d_{head}}$$

$$n_{t+1} = \sigma(f_t) \odot n_t + e^{i_t} \odot k_t \qquad\qquad \in \mathbb{R}^{d_{head}}$$

$$h_{t+1}^\top = \sigma(o_t) \odot \frac{q_t^\top c_{t+1}}{q_t^\top n_{t+1}} \qquad\qquad \in \mathbb{R}^{1 \times d_{head}}$$

$$c_{t+1} = \tilde{f}_t \odot c_t + \tilde{i}_t \odot k_t v_t^\top \qquad\qquad \in \mathbb{R}^{d_{head} \times d_{head}},$$

$$n_{t+1} = \tilde{f}_t \odot n_t + \tilde{i}_t \odot k_t \qquad\qquad \in \mathbb{R}^{d_{head}},$$

$$h_{t+1}^\top = \tilde{o}_t \odot \frac{q_t^\top c_{t+1}}{q_t^\top n_{t+1}} \qquad\qquad \in \mathbb{R}^{1 \times d_{head}}$$

$$h_{t+1}^\top = \sigma(o_t) \odot \frac{q_t^\top c_{t+1}}{\max(|q_t^\top n_{t+1}|, 1.0)}$$

$$h_{t+1}^\top = \sigma(o_t) \odot \frac{q_t^\top c_{t+1}}{q_t^\top n_{t+1}} = \sigma(o_t) \odot \frac{q_t^\top \left( \sigma(f_t) \odot c_t + e^{i_t} \odot k_t v_t^\top \right)}{q_t^\top \left( \sigma(f_t) \odot n_t + e^{i_t} \odot k_t \right)} \quad \in \mathbb{R}^{1 \times d_{head}}$$

$$h_{t+1}^\top = \tilde{o}_t \odot \frac{q_t^\top c_{t+1}}{q_t^\top n_{t+1}} = \tilde{o}_t \odot \frac{q_t^\top \left( \tilde{f}_t \odot c_t + \tilde{i}_t \odot k_t v_t^\top \right)}{q_t^\top \left( \tilde{f}_t \odot n_t + \tilde{i}_t \odot k_t \right)} \qquad \in \mathbb{R}^{1 \times d_{head}}$$

vLSTM parallel:

$$\text{forget gates} \quad \widehat{F} = XW_f^\top + b_f \ \in \ \mathbb{R}^{S \times 1}$$

$$\text{input gates} \quad \widehat{I} = XW_i^\top + b_i \ \in \ \mathbb{R}^{S \times 1}$$

$$\text{output gates} \quad O = XW_o^\top + b_o \ \in \ \mathbb{R}^{S \times d_{\text{head}}}$$

$$\text{queries} \quad Q \in \ \mathbb{R}^{S \times d_{\text{head}}}$$

$$\text{keys} \quad K \in \ \mathbb{R}^{S \times d_{\text{head}}}$$

$$\text{values} \quad V \in \ \mathbb{R}^{S \times d_{\text{head}}}$$

$$\text{hidden states} \quad H \in \mathbb{R}^{S \times d_{\text{head}}}$$

$$I = \begin{pmatrix} i_1 & 0 & 0 & \ldots & 0 \\ i_1 & i_2 & 0 & \ldots & 0 \\ i_1 & i_2 & i_3 & \ldots & 0 \\ \vdots & \vdots & \vdots & \ddots & \vdots \\ i_1 & i_2 & i_3 & \ldots & i_S \end{pmatrix} \in \mathbb{R}^{S \times S}$$

$$\widetilde{F} = \begin{pmatrix} 1 & 0 & 0 & 0 & \ldots & 0 \\ \sigma(f_2) & 1 & 0 & 0 & \ldots & 0 \\ \sigma(f_2)\sigma(f_3) & \sigma(f_3) & 1 & 0 & \ldots & 0 \\ \sigma(f_2)\sigma(f_3)\sigma(f_4) & \sigma(f_3)\sigma(f_4) & \sigma(f_4) & 1 & \ldots & 0 \\ \vdots & \vdots & \vdots & \ddots & \ddots & \vdots \\ \sigma(f_2)\sigma(f_3)\ldots\sigma(f_S) & \sigma(f_3)\ldots\sigma(f_S) & \sigma(f_4)\ldots\sigma(f_S) & \ldots & \sigma(f_S) & 1 \end{pmatrix} \in \mathbb{R}^{S \times S}$$

$$I = \begin{pmatrix} i_1 & 0 & \ldots & 0 \\ i_1 & i_2 & \ldots & 0 \\ \vdots & \vdots & \ddots & \vdots \\ i_1 & i_2 & \ldots & i_S \end{pmatrix} \in \mathbb{R}^{S \times S}$$

$$\widetilde{F} = \begin{pmatrix} 1 & 0 & 0 & \ldots & 0 \\ \sigma(f_2) & 1 & 0 & \ldots & 0 \\ \sigma(f_2)\sigma(f_3) & \sigma(f_3) & 1 & \ldots & 0 \\ \vdots & \vdots & \ddots & \ddots & \vdots \\ \sigma(f_2)\sigma(f_3)\ldots\sigma(f_S) & \sigma(f_3)\ldots\sigma(f_S) & \ldots & \sigma(f_S) & 1 \end{pmatrix} \in \mathbb{R}^{S \times S}$$

$$D = \widetilde{F} \odot \exp(I) \in \mathbb{R}^{S \times S}$$

$$H = \sigma(O) \odot CV, \quad \text{where } C = \frac{\widetilde{C}}{\sum_{j=1}^{S} \widetilde{C}_{ij}}, \text{ and } \widetilde{C} = QK^\top \odot D$$

$$C = \frac{\widetilde{C}}{\max\left(\left|\sum_{j=1}^{S} \widetilde{C}_{ij}\right|, 1.0\right)}$$

$$\widetilde{F}_{ij} = \begin{cases} 0 & \text{for } j > i \\ 1 & \text{for } j = i \\ \prod_{k=j+1}^{i} \sigma(f_k) & \text{for } j < i \end{cases}$$

sLSTM:

$$(n_{\text{head}} \times d_{\text{head}})$$

$$R \in \mathbb{R}^{d_{\text{head}} \times d_{\text{head}}}$$

$$\text{forget gate } f_t \in \mathbb{R}^{d_{\text{head}}}$$

$$\text{input gate } i_t \in \mathbb{R}^{d_{\text{head}}}$$

$$\text{cell gate } z_t \in \mathbb{R}^{d_{\text{head}}}$$

$$\text{output gate } o_t \in \mathbb{R}^{d_{\text{head}}}$$

$$\text{memory cell state } c_t \in \mathbb{R}^{d_{\text{head}}}$$

$$\text{normalizer state } n_t \in \mathbb{R}^{d_{\text{head}}}$$

$$\text{hidden state } h_t \in \mathbb{R}^{d_{\text{head}}}$$

$$f_t = x_t W_f^{\mathsf{T}} + h_t R_f^{\mathsf{T}} + b_f \qquad \in \mathbb{R}^{d_{\text{head}}}$$

$$i_t = x_t W_i^{\mathsf{T}} + h_t R_i^{\mathsf{T}} + b_i \qquad \in \mathbb{R}^{d_{\text{head}}}$$

$$z_t = x_t W_z^{\mathsf{T}} + h_t R_z^{\mathsf{T}} + b_z \qquad \in \mathbb{R}^{d_{\text{head}}}$$

$$o_t = x_t W_o^{\mathsf{T}} + h_t R_o^{\mathsf{T}} + b_o \qquad \in \mathbb{R}^{d_{\text{head}}}$$

$$f_t = x_t W_f^{\mathsf{T}} + b_f \qquad \in \mathbb{R}^{d_{\text{head}}}$$

$$i_t = h_t R_i^{\mathsf{T}} + b_i \qquad \in \mathbb{R}^{d_{\text{head}}}$$

$$z_t = x_t W_z^{\mathsf{T}} + b_z \qquad \in \mathbb{R}^{d_{\text{head}}}$$

$$o_t = x_t W_o^{\mathsf{T}} + b_o \qquad \in \mathbb{R}^{d_{\text{head}}}$$

$$c_{t+1} = \sigma(f_t) \odot c_t + e^{i_t} \odot z_t \qquad \in \mathbb{R}^{d_{\text{head}}}$$

$$n_{t+1} = \sigma(f_t) \odot n_t + e^{i_t} \qquad \in \mathbb{R}^{d_{\text{head}}}$$

$$h_{t+1} = \sigma(o_t) \odot \frac{c_{t+1}}{n_{t+1}} \qquad \in \mathbb{R}^{d_{\text{head}}}$$

$$h_{t+1} = \sigma(o_t) \odot \frac{c_{t+1}}{n_{t+1}} = \sigma(o_t) \odot \frac{\sigma(f_t) \odot c_t + e^{i_t} \odot z_t}{\sigma(f_t) \odot n_t + e^{i_t}} \qquad \in \mathbb{R}^{d_{head}}$$

$$\tilde{f}_t = \sigma(f_t), \quad \tilde{i}_t = e^{i_t}, \quad \tilde{z}_t = z_t, \quad \tilde{o}_t = \sigma(o_t)$$

$$c_{t+1} = \tilde{f}_t \odot c_t + \tilde{i}_t \odot \tilde{z}_t \qquad \in \mathbb{R}^{d_{head}}$$

$$n_{t+1} = \tilde{f}_t \odot n_t + \tilde{i}_t \qquad \in \mathbb{R}^{d_{head}}$$

$$h_{t+1} = \tilde{o}_t \odot \frac{c_{t+1}}{n_{t+1}} \qquad \in \mathbb{R}^{d_{head}}$$

$$h_{t+1} = \tilde{o}_t \odot \frac{c_{t+1}}{n_{t+1}} = \tilde{o}_t \odot \frac{\tilde{f}_t \odot c_t + \tilde{i}_t \odot \tilde{z}_t}{\tilde{f}_t \odot n_t + \tilde{i}_t} \qquad \in \mathbb{R}^{d_{head}}$$

Bibliographic references cited throughout the present disclosure:

[BMR+20]    Tom B. Brown, Benjamin Mann, Nick Ryder, Melanie Subbiah, Jared Kaplan, Prafulla Dhariwal, Arvind Neelakantan, Pranav Shyam, Girish Sastry, Amanda Askell, Sandhini Agarwal, Ariel Herbert-Voss, Gretchen Krueger, Tom Henighan, Rewon Child, Aditya Ramesh, Daniel M. Ziegler, Jeffrey Wu, Clemens Winter, Christopher Hesse, Mark Chen, Eric Sigler, Mateusz Litwin, Scott Gray, Benjamin Chess, Jack Clark, Christopher Berner, Sam McCandlish, Alec Radford, Ilya Sutskever, and Dario Amodei. Language Models are Few-Shot Learners, July 2020. arXiv:2005.14165 [cs].

[Kar22]    Andrej Karpathy. nanogpt. https://github.com/karpathy/nanoGPT, 2022. Accessed: October 5, 2023.

[KVPF20]    Angelos Katharopouloe, Apoorv Vyas, Nikolaos Pappas, and François Fleuret. Transformers are RNNs: Fast Autoregressive Transformers with Linear Attention, August 2020. arXiv:2006.16236 [cs, stat].

[MG18]    Maxim Milakov and Natalia Gimelshein. Online normalizer calculation for softmax, July 2018. arXiv:1805.02867 [cs].

[OSG+23]    Antonio Orvieto, Samuel L. Smith, Albert Gu, Anushan Fernando, Caglar Gulcehre, Razvan Pascanu, and Soham De. Resurrecting Recurrent Neural Networks for Long Sequences, March 2023. arXiv:2303.06349 [cs].

[SDH+23]    Yutao Sun, Li Dong, Shaohan Huang, Shuming Ma, Yuqing Xia, Jilong Xue, Jiany-ong Wang, and Furu Wei. Retentive Network: A Successor to Transformer for Large Language Models, July 2023. arXiv:2307.08621 [ce].

[VSP+23]    Ashish Vaswani, Noam Shazeer, Niki Parmar, Jakob Uszkoreit, Llion Jones, Aidan N. Gomez, Lukasz Kaiser, and Illia Polosukhin. Attention Is All You Need, August 2023. arXiv:1706.03762 [cs].

Although specific exemplary embodiments of the invention have been described, the person skilled in the art will readily understand that alternative embodiments may comprise only individual aspects, components, building blocks, or subsets thereof, which may provide their individual benefits as disclosed herein.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Embodiments of the invention may be implemented on a computer system. The computer system may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system may comprise any circuit or combination of circuits. In one embodiment, the computer system may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), or any other type of processor or processing circuit. Other types of circuits that may be included in the computer system may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system may include one or more storage devices, which may include one or more memory elements suitable to the particular application, such as a main memory in the form of random-access memory (RAM), one or more hard drives, and/or one or more drives that handle removable media such as compact disks (CD), flash memory cards, digital video disk (DVD), and the like. The computer system may also include a display device, one or more speakers, and a keyboard and/or controller, which can include a mouse, trackball, touch screen, voice-recognition device, or any other device that permits a system user to input information into and receive information from the computer system.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine-readable carrier. Other embodiments comprise the computer program for performing one of the methods described herein, stored on a machine-readable carrier. In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitory. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein. A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

**Claims**

1.  An artificial neural network system (200), comprising:

    (a) a phonological memory (102) configured to store input vectors and to retrieve stored input vectors; and
    (b) a semantic memory (104) configured to store semantic information extracted from input vectors.

2.  The neural network system (200) of claim 1, wherein different input vectors can be associated with the same semantic information in the semantic memory (104).

3. The neural network system (200) of any one of the preceding claims, wherein the phonological memory (102) comprises a long short-term memory (LSTM).

4. The neural network system (200) of claim 3, wherein the phonological memory (102) comprises a vectorized LSTM (vLSTM) configured to store vector-valued memory cells, thereby forming a matrix-valued memory state.

5. The neural network system (200) of claim 4, wherein the vLSTM has a parallel and recurrent form.

6. The neural network system (200) of any one of the preceding claims, wherein the phonological memory (102) comprises one or more exponential input gates.

7. The neural network system (200) of any one of the preceding claims, wherein the semantic memory (104) comprises a long short-term memory (LSTM).

8. The neural network system (200) of claim 7, wherein the semantic memory (104) comprises a scalar LSTM (sLSTM) configured to store scalar-valued memory cells, thereby forming a vector-valued memory state.

9. The neural network system (200) of claim 8, wherein the sLSTM has a non-parallel and recurrent form.

10. The neural network system (200) of any one of the preceding claims, wherein the semantic memory (104) comprises one or more exponential input gates.

11. The neural network system (200) of any one of the preceding claims, wherein the neural network system (200) is implemented as a large language model (LLM) on a data processing apparatus (1302), wherein the neural network system (200) is configured to receive input data (202) comprising an input text in natural language, wherein the neural network system (200) is configured to generate output data (204) comprising an output text in natural language; and wherein the neural network system (200) comprises at least one neural network block (100) comprising:

   - a vLSTM, in particular the vLSTM of any one of claims 4-6, as the phonological memory (102); and
   - an sLSTM, in particular the sLSTM of any one of claims 8-10, as the semantic memory (104).

12. The neural network system (200) of any one of the preceding claims, wherein at least one output of the phonological memory (102) feeds into the semantic memory (104).

13. A computer-implemented method, comprising:

   (a) providing (1202) a neural network system (200) according to any one of the preceding claims 1-12;
   (b) receiving (1204) an input vector;
   (c) storing (1206) the input vector in a phonological memory (102) of the neural network system (200); and
   (d) storing (1208) semantic information extracted from the input vector in a semantic memory (104) of the neural network system (200).

14. A data processing apparatus comprising means for carrying out the method of claim 13.

15. A computer program or a computer-readable medium having stored thereon a computer program, the computer program comprising instructions which, when the program is executed by a computer, cause the computer to carry out the method of claim 13.

Fig. 1

Output data
204

Neural network system
200

xLSTM block
100

$$X' \in \mathbb{R}^{S \times d_{\mathrm{model}}}$$

Feed Forward

Layer-Norm

104

MH sLSTM

Layer-Norm

102

MH vLSTM

Layer-Norm

$$X \in \mathbb{R}^{S \times d_{\mathrm{model}}}$$

Input data
202

Fig. 2

# Multi-Head vLSTM

$$Y \in \mathbb{R}^{S \times d_{\text{model}}}$$

Sequence length: $S$
Embedding dim.: $d_{\text{model}}$
Head dimension: $d_{\text{head}}$
Num. of heads: $n_{\text{head}}$

vLSTM has a
parallel & recurrent form

$$y_t \in \mathbb{R}^{d_{\text{model}}}$$

$$y_t \in \mathbb{R}^{d_{\text{model}}}$$
$$Y \in \mathbb{R}^{S \times d_{\text{model}}}$$

MH vLSTM

$$X \in \mathbb{R}^{S \times d_{\text{model}}}$$
$$x_t \in \mathbb{R}^{d_{\text{model}}}$$

Linear

Concat

vLSTM $\times n_{\text{head}}$

$Q$   $K$   $V$

Linear   Linear   Linear

$$(S, n_{\text{head}} \times d_{\text{head}})$$

queries, keys, values
$$Q, K, V \in \mathbb{R}^{S \times d_{\text{head}}}$$
$$q_t, k_t, v_t \in \mathbb{R}^{d_{\text{head}}}$$

$$X \in \mathbb{R}^{S \times d_{\text{model}}}$$
$$x_t \in \mathbb{R}^{d_{\text{model}}}$$

+ forget, input & output gate

<u>Fig. 3</u>

EP 4 597 364 A1

**Multi-Head sLSTM**

Sequence length: $S$
Embedding dim.: $d_{\text{model}}$
Head dimension: $d_{\text{head}}$
Num. of heads: $n_{\text{head}}$

sLSTM has a recurrent form only

$y_t \in \mathbb{R}^{d_{\text{model}}}$

Linear

$(n_{\text{head}} \times d_{\text{head}})$

Concat

Recurrent weights
$R \in \mathbb{R}^{d_{\text{head}} \times d_{\text{head}}}$

sLSTM   $\times\, n_{\text{head}}$

Linear

+ forget, input & output gate

$y_t \in \mathbb{R}^{d_{\text{model}}}$

MH sLSTM

$x_t \in \mathbb{R}^{d_{\text{model}}}$

$x_t \in \mathbb{R}^{d_{\text{model}}}$

Fig. 4

# Including the xLSTM into the Transformer

Sequence length: $S$
Embedding dim.: $d_{model}$
Vocabulary size: $n_{vocab}$

Transformer Decoder

Transformer Block

output probabilities
$P \in \mathbb{R}^{S \times n_{vocab}}$

LM Head*

$X' \in \mathbb{R}^{S \times d_{model}}$

Layer-Norm

N x | Transformer Block

$X \in \mathbb{R}^{S \times d_{model}}$

Positio -ncoding

Layer-Norm

Token Embedding*

*tied weights (optional)

input tokens $\in \mathbb{R}^{S}$

$X' \in \mathbb{R}^{S \times d_{model}}$

Feed Forward

Layer-Norm

100

MH vLSTM & sLSTM

Layer-Norm

$X \in \mathbb{R}^{S \times d_{model}}$

## Fig. 5

EP 4 597 364 A1

The Mamba Block & xLSTM

Fig. 6

recurrent weights, gating mechanism

diagonalize recurrent weights, no gates

learnable decay parameters, no hidden-hidden interaction

vector-valued memory state
or
scalar-valued memory cells

recurrent weights

LSTM

LRU, State Space Models

RWKV-4

sLSTM

xLSTM

combination of vLSTM & sLSTM

vLSTM

dot-product interactions

Attention

Linear Attention, Retention, TransNormer, RWKV-5/6

softmax, QKV

drop softmax

matrix-valued memory state
or
vector-valued memory cells

Fig. 7

Fig. 8

Fig. 9

## val/.Perplexity

Fig. 10

Fig. 11

Provide neural network system with dual memory architecture
1202

↓

Receive input vector
1204

↓

Store input vector in phonological memory
1206

↓

Store semantic information extracted from input vector in semantic memory
1208

## Fig. 12

Data processing apparatus
1302

Processor
1304

Memory
1306

Computer program
1308

## Fig. 13

Europäisches
Patentamt

European
Patent Office

Office européen
des brevets

# EUROPEAN SEARCH REPORT

**Application Number**

EP 24 15 5883

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | THEODORE R SUMERS ET AL: "Cognitive Architectures for Language Agents", ARXIV.ORG, CORNELL UNIVERSITY LIBRARY, 201 OLIN LIBRARY CORNELL UNIVERSITY ITHACA, NY 14853, 27 September 2023 (2023-09-27), XP091623349, * abstract; figures 1, 3-4; tables 1-2 * * sections 1, 2.3, 2.4, 3.3, 4-7 * | 1-15 | INV. G06N3/0442 G06N3/045 G06N3/0475 ADD. G06N3/0499 |
| X | US 2022/415304 A1 (KARLAPATI SRI VISHNU KUMAR [GB] ET AL) 29 December 2022 (2022-12-29) * paragraph [0016] - paragraph [0019]; figures 1-10 * * paragraph [0029] - paragraph [0075] * | 1-15 | |
| X | Harsh Sharma Sharma - ET AL: "Understanding Encoders-Decoders with Attention Based Mechanism", DataX Journal, 1 February 2021 (2021-02-01), XP093187044, Retrieved from the Internet: URL:https://medium.com/data-science-community-srm/understanding-encoders-decoders-with-attention-based-mechanism-c1eb7164c581 [retrieved on 2024-07-18] * page 2 - page 10 * | 1-15 | **TECHNICAL FIELDS SEARCHED (IPC)** G06N |

-/--

The present search report has been drawn up for all claims

| Place of search | Date of completion of the search | Examiner |
|---|---|---|
| The Hague | 18 July 2024 | Cilia, Elisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt

European
Patent Office

Office européen
des brevets

**EUROPEAN SEARCH REPORT**

**Application Number**

EP 24 15 5883

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHI LI ET AL: "ELSTM: An improved long short-term memory network language model for sequence learning", EXPERT SYSTEMS, LEARNED INFORMATION LTD. ABINGDON, GB, vol. 41, no. 6, 28 December 2022 (2022-12-28), page n/a, XP072629857, ISSN: 0266-4720, DOI: 10.1111/EXSY.13211 * the whole document * | 1-15 | |
| A | YUTAO SUN ET AL: "Retentive Network: A Successor to Transformer for Large Language Models", ARXIV.ORG, CORNELL UNIVERSITY LIBRARY, 201 OLIN LIBRARY CORNELL UNIVERSITY ITHACA, NY 14853, 9 August 2023 (2023-08-09), XP091582287, * the whole document * | 1-15 | |
| A | LEE SEOYEONG ET AL: "SSA-SL Transformer for Bearing Fault Diagnosis under Noisy Factory Environments", ELECTRONICS, vol. 11, no. 9, 7 May 2022 (2022-05-07), page 1504, XP093078456, DOI: 10.3390/electronics11091504 * the whole document * | 1-15 | **TECHNICAL FIELDS SEARCHED (IPC)** |
| A | WO 2023/230058 A1 (GOOGLE LLC [US]) 30 November 2023 (2023-11-30) * the whole document * | 1-15 | |

-/--

The present search report has been drawn up for all claims

| Place of search | Date of completion of the search | Examiner |
|---|---|---|
| The Hague | 18 July 2024 | Cilia, Elisa |

EPO FORM 1503 03.82 (P04C01)

page 2 of 3

| | Europäisches Patentamt European Patent Office Office européen des brevets | **EUROPEAN SEARCH REPORT** | Application Number EP 24 15 5883 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KUMAR ABHILASHA A: "Semantic memory: A review of methods, models, and current challenges", PSYCHONOMIC BULLETIN, SPRINGER US, NEW YORK, vol. 28, no. 1, 3 September 2020 (2020-09-03), pages 40-80, XP037553021, ISSN: 1069-9384, DOI: 10.3758/S13423-020-01792-X [retrieved on 2020-09-03] * the whole document * ----- | 1-15 | |
| | | | **TECHNICAL FIELDS SEARCHED (IPC)** |

The present search report has been drawn up for all claims

| Place of search | Date of completion of the search | Examiner |
|---|---|---|
| The Hague | 18 July 2024 | Cilia, Elisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 24 15 5883

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2024

| Patent document cited in search report | Publication date | Patent family member(s) | Publication date |
|---|---|---|---|
| US 2022415304 A1 | 29-12-2022 | US 2022415304 A1<br>WO 2022271570 A1 | 29-12-2022<br>29-12-2022 |
| WO 2023230058 A1 | 30-11-2023 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018217948 A1

- EP 3542316 A

**Non-patent literature cited in the description**

- **HOCHREITER, SEPP** ; **SCHMIDHUBER, JÜRGEN**. Long Short-term Memory. *Neural computation.*, 1997, vol. 9, 1735-80
- **VASWANI, ASHISH et al.** Attention Is All You Need.. *arXiv:1706.03762.*, 2023
- **GU, ALBERT et al.** Mamba: Linear-Time Sequence Modeling with Selective State Spaces.. *arXiv:2312.00752.*, 2023
- **HOCHREITER, SEPP** ; **SCHMIDHUBER, JÜRGEN**. Long Short-term Memory.. *Neural computation*, 1997, vol. 9, 1735-80
- **TOM B. BROWN** ; **BENJAMIN MANN** ; **NICK RYDER** ; **MELANIE SUBBIAH** ; **JARED KAPLAN** ; **PRAFULLA DHARIWAL** ; **ARVIND NEELAKANTAN** ; **PRANAV SHYAM** ; **GIRISH SASTRY** ; **AMANDA ASKELL**. Language Models are Few-Shot Learners. *arXiv:2005.14165*, July 2020
- **ANDREJ KARPATHY**. *nanogpt*, 2022, https://github.com/karpathy/nanoGPT

- **ANGELOS KATHAROPOULOE** ; **APOORV VYAS** ; **NIKOLAOS PAPPAS** ; **FRANÇOIS FLEURET.** Transformers are RNNs: Fast Autoregressive Transformers with Linear Attention. *arXiv:2006.16236*, August 2020
- **MAXIM MILAKOV** ; **NATALIA GIMELSHEIN**. Online normalizer calculation for softmax. *arXiv:1805.02867*, July 2018
- **ANTONIO ORVIETO** ; **SAMUEL L. SMITH** ; **ALBERT GU** ; **ANUSHAN FERNANDO** ; **CAGLAR GULCEHRE** ; **RAZVAN PASCANU** ; **SOHAM DE.** Resurrecting Recurrent Neural Networks for Long Sequences. *arXiv:2303.06349*, March 2023
- **YUTAO SUN** ; **LI DONG** ; **SHAOHAN HUANG** ; **SHUMING MA** ; **YUQING XIA** ; **JILONG XUE** ; **JIANY-ONG WANG** ; **FURU WEI.** Retentive Network: A Successor to Transformer for Large Language Models. *arXiv:2307.08621*, July 2023
- **ASHISH VASWANI** ; **NOAM SHAZEER** ; **NIKI PARMAR** ; **JAKOB USZKOREIT** ; **LLION JONES** ; **AIDAN N. GOMEZ** ; **LUKASZ KAISER** ; **ILLIA POLOSUKHIN**. Attention Is All You Need. *arXiv:1706.03762*, August 2023